# EUROPEAN PATENT APPLICATION

(11) **EP 4 564 995 A1**
(43) Date of publication of application: **04.06.2025**
(21) Application number: 22952220.6
(22) Date of filing: 25.07.2022
(51) Int. Cl.: H04W 76/27

(54) **DATA TRANSMISSION METHOD AND APPARATUS**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/107716
(87) International publication number: WO 2024/020753

(57) **Abstract**

Embodiments of the present disclosure disclose a data transmission method and apparatus, which can be applied to the technical field of communications. The method executed by a first node comprises: determining information about small data transmission (SDT) that needs to be sent and/or received, wherein the information comprises data and/or signaling, and the first node is a node that cannot determine whether a terminal device in a non-connected is within the coverage thereof, or a node that cannot directly receive/transmit uplink and downlink information from/to the terminal device in the non-connected state (S51); and sending a first message to a second node, wherein the first message comprises first information related to the SDT of the terminal device in the non-connected state, and the first information is used for instructing the second node to send and/or receive the information about the SDT according to the first information after receiving a first request message of the terminal device (S52). Thus, the first node can accurately receive/transmit the information about the SDT from/to the terminal device in the non-connected state, so that transmission failure and resource waste can be avoided.

## Description

### TECHNICAL FIELD

The present disclosure relates to the field of communication technology, and in particular to a method and an apparatus for transmitting data.

### BACKGROUND

In the related art, a terminal device may be in a non-connected state, e.g., an idle state or an inactive state (IDLE/INACTIVE), send uplink information to a node serving the terminal device (where the terminal device is within its coverage range) by SDT, and receive downlink information sent by the node serving the terminal device.

However, for a node incapable of determining whether the terminal device in the non-connected state is within its coverage range, or a node incapable of directly performing transceiving of uplink and downlink information with the terminal device in the non-connected state, how to ensure accurate and efficient transceiving of uplink and downlink information with the terminal device in the non-connected state to avoid transmission failure and resource waste is a problem needing to be solved urgently.

### SUMMARY

Embodiments of the present disclosure provide a method and an apparatus for transmitting data, such that a first node can accurately perform transceiving of information of SDT with a terminal device in a non-connected state, and can avoid transmission failure and resource waste.

In a first aspect, embodiments of the present disclosure provide a method for transmitting data, performed by a first node, including: determining information of small data transmission (SDT) needing to be sent and/or received, in which the first node is a node that is incapable of determining whether a terminal device in a non-connected state is within its coverage range, or a node incapable of directly performing transceiving of uplink and downlink information with a terminal device in a non-connected state; and sending a first message to a second node, in which the first message includes first information associated with the SDT of the terminal device in the non-connected state, and the first information is configured to indicate the second node to send and/or receive the information of the SDT according to the first information after receiving a first request message of the terminal device.

In the technical solution, the first node determines information of small data transmission (SDT) needing to be sent and/or received, in which the first node is a node that is incapable of determining whether a terminal device in a non-connected state is within its coverage range, or a node incapable of directly performing transceiving of uplink and downlink information with a terminal device in a non-connected state; and sends a first message to a second node, in which the first message includes first information associated with the SDT of the terminal device in the non-connected state, and the first information is configured to indicate the second node to send and/or receive the information of the SDT according to the first information after receiving a first request message of the terminal device. Thus, the first node can accurately and efficiently perform transceiving of information of SDT with a terminal device in a non-connected state, and can avoid transmission failure and resource waste.

In a second aspect, embodiments of the present disclosure provide another method for transmitting data, performed by a second node, including: receiving a first message sent by a first node, in which the first message includes first information associated with SDT of a terminal device in a non-connected state, the first information is configured to indicate the second node to send and/or receive information of the SDT according to the first information after receiving a first request message of the terminal device, and the first node is a node that is incapable of determining whether the terminal device in the non-connected state is within its coverage range, or a node incapable of directly performing transceiving of uplink and downlink information with the terminal device in the non-connected state.

In a third aspect, embodiments of the present disclosure provide a communication device, and the communication device has part or all of functions for implementing the first node in the method of the first aspect. For example, the functions of the communication device can have functions in part or all of embodiments of the present disclosure, and can also have functions for separately implementing any one of embodiments of the present disclosure. The functions can be implemented by hardware or by executing the corresponding software by hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices. The communication device may further include a storage module, and the storage module is configured to couple with the transceiver module and the processing module, which stores the computer program and data necessary for the communication device.

In an implementation, the communication device includes: a processing module configured to determine information of small data transmission (SDT) needing to be sent and/or received, in which the first node is a node that is incapable of determining whether a terminal device in a non-connected state is within its coverage range, or a node incapable of directly performing transceiving of uplink and downlink information with a terminal device in a non-connected state; and a transceiver module configured to send a first message to a second node, in which the first message includes first information associated with the SDT of the terminal device in the non-connected state, and the first information is configured to indicate the second node to send and/or receive the information of the SDT according to the first information after receiving a first request message of the terminal device.

In a fourth aspect, embodiments of the present disclosure provide another communication device, and the communication device has part or all of functions for implementing the second node in the method examples of the second aspect. For example, the functions of the communication device can have functions in part or all of embodiments of the present disclosure, and can also have functions for separately implementing any one of embodiments of the present disclosure. The functions can be implemented by hardware or by executing the corresponding software by hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices. The communication device may further include a storage module, and the storage module is configured to couple with the transceiver module and the processing module, which stores the computer program and data necessary for the communication device.

In an implementation, the communication device includes: a transceiver module configured to receive a first message sent by a first node, in which the first message includes first information associated with SDT of a terminal device in a non-connected state, the first information is configured to indicate the second node to send and/or receive information of the SDT according to the first information after receiving a first request message of the terminal device, and the first node is a node that is incapable of determining whether the terminal device in the non-connected state is within its coverage range, or a node incapable of directly performing transceiving of uplink and downlink information with the terminal device in the non-connected state.

In a fifth aspect, embodiments of the present disclosure provide a communication device includes a processor that performs the method of the first aspect when the processor invokes a computer program in a memory.

In a sixth aspect, embodiments of the present disclosure provide a communication device includes a processor that performs the method of the second aspect when the processor invokes a computer program in a memory.

In a seventh aspect, embodiments of the present disclosure provide a communication device including a processor and a memory storing a computer program; and the processor executes the computer program stored in the memory to cause the communication device to perform the method in the first aspect described above.

In an eighth aspect, embodiments of the present disclosure provide a communication device including a processor and a memory storing a computer program; and the processor executes the computer program stored in the memory to cause the communication device to perform the method in the second aspect described above.

In a ninth aspect, embodiments of the present disclosure provide a communication device including a processor and an interface circuit configured to receive code instructions and transmit the code instructions to the processor, and the processor is configured to run the code instructions to cause the device to perform the method of the first aspect described above.

In a tenth aspect, embodiments of the present disclosure provide a communication device including a processor and an interface circuit configured to receive code instructions and transmit the code instructions to the processor, and the processor is configured to run the code instructions to cause the device to perform the method of the second aspect described above.

In an eleventh aspect, embodiments of the present disclosure provide a migration system. The system includes a communication device in the third aspect and a communication device in the fourth aspect, or, the system includes a communication device in the fifth aspect and a communication device in the sixth aspect, or, the system includes a communication device in the seventh aspect and a communication device in the eighth aspect, or, the system includes a communication device in the ninth aspect and the communication device in the tenth aspect.

In a twelfth aspect, embodiments of the present disclosure provide a computer-readable storage medium configured to store instructions for use by the first node to cause the first node to perform the method in the first aspect when the instructions are executed.

In a thirteen aspect, embodiments of the present disclosure provide a computer-readable storage medium configured to store instructions for use by the second node to cause the second node to perform the method in the second aspect when the instructions are executed.

In a fourteenth aspect, the present disclosure further provides a computer program product including a computer program that, when run on a computer, causes the computer to perform the method in the first aspect described above.

In a fifteenth aspect, the present disclosure further provides a computer program product including a computer program that, when run on a computer, causes the computer to perform the method in the second aspect described above.

In a sixteenth aspect, the present disclosure provides a chip system including at least one processor and an interface configured to support the first node to implement the functions involved in the first aspect, for example, determining or processing at least one of the data and information involved in the method described above. In a possible design, the chip system further includes a memory, and the memory is configured to store a computer program and data necessary for the first node. The chip system may be composed of a chip or may include a chip and other discrete devices.

In a seventeenth aspect, the present disclosure provides a chip system including at least one processor and an interface configured to support the second node to implement the functions involved in the second aspect, for example, determining or processing at least one of the data and information involved in the method described above. In a possible design, the chip system further includes a memory, and the memory is configured to store a computer program and data necessary for the second node. The chip system may be composed of a chip or may include a chip and other discrete devices.

In an eighteenth aspect, the present disclosure provides a computer program that, when run on a computer, causes the computer to perform the method in the first aspect described above.

In a nineteenth aspect, the present disclosure provides a computer program that, when run on a computer, causes the computer to perform the method in the second aspect described above.

### BRIEF DESCRIPTION OF THE DRAWINGS

In order to more clearly illustrate the technical solutions in embodiments or background art of the present disclosure, the accompanying drawings to be used in the embodiments or background art of the present disclosure will be described below.
FIG. 1 is a flowchart of a method for performing RA-SDT for a terminal device in a non-connected state provided by an embodiment of the present disclosure;
FIG. 2 is a schematic diagram of an architecture of a communication system provided by an embodiment of the present disclosure;
FIG. 3 is a schematic diagram of an architecture of a CU-DU provided by an embodiment of the present disclosure;
FIG. 4 is a schematic diagram of an RRC state transition provided by an embodiment of the present disclosure;
FIG. 5 is a flowchart of a method for transmitting data provided by an embodiment of the present disclosure;
FIG. 5a is a flowchart of another method for transmitting data provided by an embodiment of the present disclosure;
FIG. 5b is a flowchart of yet another method for transmitting data provided by an embodiment of the present disclosure;
FIG. 6 is a flowchart of another method for transmitting data provided by an embodiment of the present disclosure;
FIG. 7 is a flowchart of yet another method for transmitting data provided by an embodiment of the present disclosure;
FIG. 8 is a flowchart of yet another method for transmitting data provided by an embodiment of the present disclosure;
FIG. 9 is a flowchart of yet another method for transmitting data provided by an embodiment of the present disclosure;
FIG. 10 is a flowchart of yet another method for transmitting data provided by an embodiment of the present disclosure;
FIG. 11 is a flowchart of yet another method for transmitting data provided by an embodiment of the present disclosure;
FIG. 11a is a flowchart of yet another method for transmitting data provided by an embodiment of the present disclosure;
FIG. 12 is a flowchart of yet another method for transmitting data provided by an embodiment of the present disclosure;
FIG. 13 is a flowchart of yet another method for transmitting data provided by an embodiment of the present disclosure;
FIG. 14 is a flowchart of yet another method for transmitting data provided by an embodiment of the present disclosure;
FIG. 15 is a flowchart of yet another method for transmitting data provided by an embodiment of the present disclosure;
FIG. 16 is a flowchart of yet another method for transmitting data provided by an embodiment of the present disclosure;
FIG. 17 is a flowchart of yet another method for transmitting data provided by an embodiment of the present disclosure;
FIG. 18 is a flowchart of yet another method for transmitting data provided by an embodiment of the present disclosure;
FIG. 19 is a flowchart of yet another method for transmitting data provided by an embodiment of the present disclosure;
FIG. 20 is a flowchart of yet another method for transmitting data provided by an embodiment of the present disclosure;
FIG. 21 is a flowchart of yet another method for transmitting data provided by an embodiment of the present disclosure;
FIG. 22 is a flowchart of yet another method for transmitting data provided by an embodiment of the present disclosure;
FIG. 23 is a flowchart of yet another method for transmitting data provided by an embodiment of the present disclosure;
FIG. 24 is a block diagram of a communication device provided by an embodiment of the present disclosure;
FIG. 25 is a block diagram of another communication device provided by an embodiment of the present disclosure; and
FIG. 26 is a schematic block diagram of a chip provided by an embodiment of the present disclosure.

### DETAILED DESCRIPTION

To facilitate understanding of the present disclosure, some of the concepts involved in embodiments of the present disclosure are briefly described herein.

### 1. SDT (Small Data Transmission)

In general, data can only be transmitted between a terminal device and an access network device when the terminal device is in an RRC connected state (CONNECTED). However, in some scenarios, a terminal device in an RRC idle state (IDLE) or RRC inactive state (INACTIVE) needs to transmit small data packets, which can be referred to as small data, and the signaling required for the terminal device to enter the RRC CONNECTED state from the RRC IDLE state or the RRC INACTIVE state is even larger than the small data, which leads to unnecessary power consumption and signaling overhead of the terminal device. To avoid the above, an terminal device in the RRC IDLE state or RRC INACTIVE state can transmit the small data during random access (RA) or transmit the small data on a resource configured by the access network device without having to enter the RRC CONNECTED state before transmitting the small data.

The above transmission process can be referred to as SDT (small data transmission), in which the manner in which the terminal device transmits the small data on the resource configured by the access network device can be referred to as CG-SDT (Configure Grant small data transmission), and the manner in which the terminal device transmits the small data during the random access can be referred to as RA-SDT (Random Access small data transmission).

According to the resource configured by the access network device, the terminal device can send data directly to the access network device when it is in the non-connected state, e.g., IDLE (idle state) or INACTIVE (inactive state), by following methods:
1) Msg3 of a four-step random access process for initial access (also referred to as 4-step RACH SDT);
2) MsgA of a two-step random access process for initial access (also referred to as 2-step RACH SDT); or
3) an exclusive uplink PUSCH (Physical Uplink Shared Channel) resource (i.e., CG (Configure Grant) or PUR (Preallocated Uplink Resource)) configured by the access network device; also referred to as CG SDT.

The SDT process may include an initial data sending phase and a subsequent data sending phase.

The initial data sending phase: starts from triggering the initial data sending of the SDT to receiving configuration information from a network side for the initial data.

The acknowledge information will have the following three types for different SDT processes:
(1) 4-step RACH SDT: the acknowledge information is a contention resolution identity for successful receiving of Msg4;
(2) 2-step RACH SDT: the acknowledge information is a contention resolution identity for successful receiving of MsgB;
(3) CG-SDT: the acknowledge information is a successful data receiving indication sent by the access network device (e.g., an ACK (acknowledgement) information indicated by a physical layer DCI (downlink control information)).

The subsequent data sending phase: from receiving of the acknowledge information from the access network device for the initial data, to receiving of a connection release message sent by the access network device. In this phase, the terminal device can send and receive uplink and downlink data.

The subsequent data sending phase of CG-SDT, during which the terminal device listens to a PDCCH (physical downlink control channel) to receive a C-RNTI (Cell Radio Network Temporary Identifier), and sends a CG-PUSCH at a subsequent moment; and the terminal device listens to the PDCCH and sends the CG-PUSCH repeatedly until receiving the connection release message sent by the access network device.

For the CG-SDT resource configured by the access network device, the terminal device will start a feedback timer (e.g., feedbackTimer) to listen for feedback information from the access network device after the terminal device sends data using the CG resource. If the terminal device does not receive a successful receiving acknowledge from the access network device during operation of the feedback timer, the terminal device performs a CG-SDT retransmission by retransmitting the data at a subsequent CG resource. For an uplink dynamic authorization configured grant, each time the terminal device sends an uplink new data transmission on a HARQ process it starts a configured grant timer corresponding to the HARQ process, and no other new transmission can be scheduled on the HARQ process during operation of the timer. A configured grant retransmission timer (CG-RetransmissionTimer) may be configured per configured grant, to perform uplink automatic retransmission. Each time the terminal device sends an uplink new transmission or retransmission on a HARQ process it starts a CG-RetransmissionTimer corresponding to the HARQ process, and no uplink automatic retransmission is performed during operation of the timer. After the timer stops operation, uplink automatic retransmission is started.

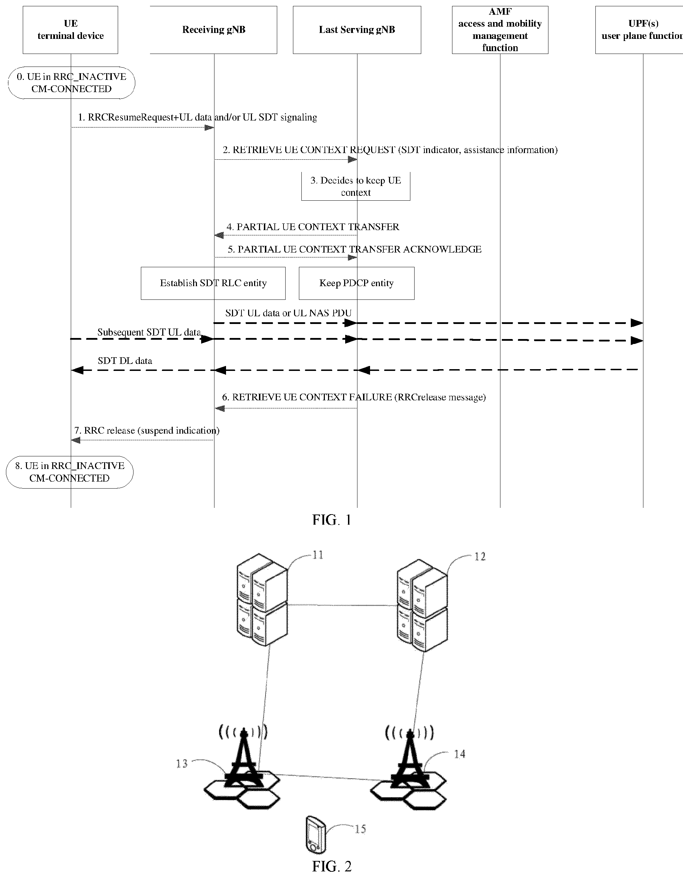

The terminal device can send the uplink data to the network side by means of RA-SDT or CG-SDT in the RRC idle state (IDLE) or RRC inactive state (INACTIVE), and if the access network device (receiving gNB) receiving the uplink data is not an access network device (last serving gNB) last serving the terminal device , the receiving gNB needs to obtain a terminal device context, or a partial terminal device context, from the last serving gNB in order to receive the uplink data. The last serving gNB can decide whether or not to perform anchor relocation, if no anchor relocation is performed (i.e., without anchor relocation), a flow as illustrated in FIG. 1 is executed.
1) The terminal device sends an RRC resume request as well as the data and/or signaling of an uplink (UL) SDT to the receiving gNB.
2) The receiving gNB uses I-RNTI (inactive radio network temporary identifier) to identify the last serving gNB and retrieves the terminal device context through an XnAP (Xn application protocol) retrieval terminal device context process. The receiving gNB indicates that the terminal device request is an SDT interaction and may also provide SDT assistance information (i.e., single packet, multiple packets).
3) The last serving gNB decides not to relocate the terminal device context for the SDT.
4) The last serving gNB transmits a partial terminal device context, including an RLC context associated with the SDT.
5) The receiving gNB confirms receiving of the partial terminal device context and provides an associated DL TNL address if required. After completing the partial terminal device context retrieval, the terminal device context is retained at the last serving gNB, the RLC context associated with the SDT is established at the receiving gNB, and then the UL SDT data is sent to the UPF; and if there is a UL NAS (non-access stratum) PDU (protocol data unit), then the UL NAS PDU is sent to the AMF.
6) After the SDT transmission is completed, the last serving gNB responds to the receiving gNB with a RETRIEVE UE CONTEXT FAILURE message, including an encapsulated RRCRelease message. The RRCRelease message contains a suspend configuration.
7) The receiving gNB sends the RRCRelease message to the terminal device.
8) The terminal device remains in the "RRC_INACTIVE" state.

### 2. MT (Mobile Terminated) SDT

The network side allows the terminal device to initiate the connection recovery (or establishment) process in the IDLE/INACTIVE state by sending a downlink paging message. This allows the terminal device to remain in the IDLE/INACTIVE state and receive the downlink data sent from the network side.

In order to better understand a method and an apparatus for transmitting data disclosed by embodiments of the present disclosure, a communication system to which embodiments of the present disclosure apply is first described below.

As illustrated in FIG. 2, embodiments of the present disclosure provide a communication system including: a core network device (e.g., a 5G core network (5th generation core, 5GC) 11, an evolved packet core network (EPC) 12), an access network device (e.g., a continued evolving node B (gNB) 13, an evolved node B (eNB)14), and a terminal device 15.

The terminal device 15, also referred to as user device (UE), mobile station (MS), mobile terminal (MT), etc., is a device that provides voice and/or data connectivity to a user. Examples include handheld devices, in-vehicle devices, etc. with wireless connection function. At present, some examples of terminal devices include: mobile phone, tablet PC, laptop computer, PDA, mobile internet device (MID), wearable device, virtual reality (VR) device, augmented reality (AR) device, wireless terminal in industrial control, wireless terminal in self driving, wireless terminal in remote medical surgery, wireless terminal in smart grid, wireless terminal in transportation security, wireless terminal in smart city, wireless terminal in smart home, and so on.

The core network device 11 refers to a device in the core network (CN) that provides service support for the terminal device. Currently, some core network devices include: an access and mobility management function (AMF) entity, a session management function (SMF) entity, a user plane function (UPF) entity, and so on, which are not listed here. The AMF entity can be responsible for access management and mobility management of the terminal device. The SMF entity can be responsible for session management, such as session establishment for the user. The UPF entity can be a functional entity of a user plane and is primarily responsible for connecting to an external network. It should be noted that the entity in the present disclosure may also be referred to as a network element or a functional entity, e.g., the AMF entity may also be referred to as an AMF network element or an AMF functional entity, the SMF entity may also be referred to as an SMF network element or an SMF functional entity, and so on.

The access network device 13 refers to a radio access network (RAN) node (or device), which may also be referred to as a base station, that accesses a terminal device to a wireless network. Currently, some examples of RAN nodes include: gNB, eNB, transmission reception point (TRP), radio network controller (RNC), node B (NB), base station controller (BSC), base transceiver station (BTS), home base station (e.g., home evolved NodeB, or homenode B, HNB), base band unit (BBU), or wireless fidelity (Wi-Fi) access point (AP), etc. Additionally, in a network architecture, the access network device may include a centralized unit (CU), or a distributed unit (DU), or a RAN device including a CU and a DU. The RAN device including the CU and the DU, splits the protocol layer from a logical functional point of view, some functions of the protocol layer are placed in the CU for centralized control, some or all of the remaining functions of the protocol layer are distributed in the DU, and the DU is centrally controlled by the CU.

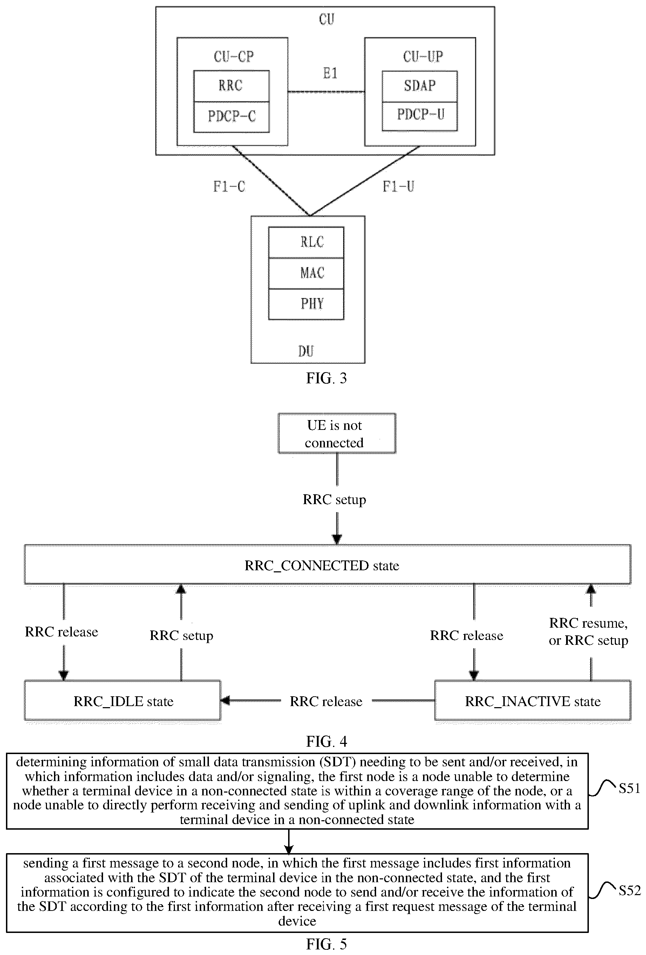

As illustrated in FIG. 3, it is a schematic diagram of an architecture of a CU-DU. The CU and the DU can be physically separate or deployed together. The CU and the DU can be divided according to the protocol layer, e.g., one of the possible divisions is that the CU is configured to perform the functions of radio resource control (RRC) layer, service data adaptation protocol (SDAP) layer (this protocol layer is a protocol layer that is available when the access network device is connected to the 5G core network), packet data convergence protocol (PDCP) layer; and the DU is configured to perform the functions of radio link control (RLC) layer, medium access control (MAC) layer, and physical (PHY) layer.

It should be understood that the above division is only an example, and the CU and the DU can be divided in other ways as well. For example, the CU or the DU can be divided to have functions of more protocol layers. For example, the CU or the DU can also be divided to have some of the processing functions of the protocol layer.

In a possible implementation, some of the functions of the RLC layer and the functions of the protocol layer above the RLC layer are provided at the CU, and the remaining functions of the RLC layer and the functions of the protocol layer below the RLC layer are provided at the DU.

In another possible implementation, the functions of the CU or the DU can also be divided according to the business type or other system requirements. For example, by latency, functions whose processing time is required to meet the latency requirement are provided at the DU, and functions that are not required to meet the latency requirement are provided at the CU.

In yet another possible implementation, the CU may also have one or more functions of the core network. One or more CUs can be provided centrally or separately. For example, the CU can be provided on the network side to facilitate centralized management. The DU can have more than one RF function, or the RF functions can be provided remotely.

It should be understood that the functions of the CU and the DU may be provided as desired in specific implementations, and embodiments of the present disclosure do not limit this in any way. The functions of the CU can be implemented by one entity or by different functional entities. In a way, the functions of the CU can be further divided into control plane (CP) function and user plane (UP), i.e., the CU can be divided into CU-UP and CU-CP. The CU-CP and the CU-UP can be implemented by different functional entities or by the same functional entity. The CU-CP and the CU-UP can be coupled with the DU to jointly complete the functions of the access network device. In a possible way, the CU-CP is responsible for the control plane function and contains mainly RRC and PDCP-C. The PDCP-C is mainly responsible for encryption and decryption of control plane data, integrity protection, and data transmission. The CU-UP is responsible for user plane function and contains mainly SDAP and PDCP-U. The SDAP is mainly responsible for processing the data from the core network device and mapping the data flow to a bearer. The PDCP-U is mainly responsible for encryption and decryption of the data plane, integrity protection, header compression, serial number maintenance, and data transmission. Another possible implementation is that PDCP-C is also contained in the CU-UP.

Communication may be performed between the core network device and the CU (e.g., CU-UP and/or CU-CP), e.g., the CU-CP may communicate with the core network device through an Ng interface on behalf of the access network device. Communication may be performed between the CU-UP and the CU-CP, e.g., through an E1 interface. Communication can be performed between the CU-UP and the DU as well as between the CU-CP and the DU, for example, the CU-CP can communicate with the DU through F1-C (control plane), and the CU-UP can communicate with the DU through F1-U (user plane). A plurality of DUs may share a single CU, and a single DU may be connected to a plurality of CUs (not illustrated in the figures). The CU and the DU may communicate with each other through an interface (e.g. F1 interface).

In the communication system, both the access network device 13 and the access network device 14 may communicate with a plurality of terminal devices. It should be understood, however, that the terminal device in communication with the access network device 13 and the terminal device in communication with the access network device 14 may be the same or different. The terminal device 15 illustrated in FIG. 2 may communicate with both the access network device 13 and the access network device 14, but this only illustrates one possible scenario, and in some scenarios, the terminal device may communicate with only the access network device 13 or the access network device 14, which is not limited by the present disclosure.

It should be understood that FIG. 2 is only an illustrative simplified schematic diagram for ease of understanding, and the communication system may also include other access network devices, terminal devices, or core network devices, which is not depicted in FIG. 2.

It should be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

In NR and LTE systems, an RRC state of a terminal device (UE) include a connected state (RRC_CONNECTED), an idle state (RRC_IDLE), and an inactive state (RRC_INACTIVE, or referred to as a third state). The RRC inactive state is a newly introduced state when the terminal device is connected to the 5G core network through the access network device, which is between the connected state and the idle state. In the RRC_INACTIVE state, there is no RRC connection between the terminal device and the access network device, but the connection between the access network device and the core network device is maintained, and the terminal device stores all or part of the information necessary to establish/recover the connection. Thus, in the RRC_INACTIVE state, the terminal device can quickly establish or recover an RRC connection with the access network device according to the stored associated information when it needs to establish a connection.

When the terminal device is in the RRC_CONNECTED state, the terminal device establishes a link with the access network device and the core network, and when there is data arriving at the network, it can be directly transmitted to the terminal device; when the terminal device is in the RRC_INACTIVE state, it means that the terminal device once established a link with the access network device and the core network, but the link from the terminal device to the access network device is released, the access network device will store the context of the terminal device, and when there is data to be transmitted, the access network device may rapidly recover this link. When the terminal device is in RRC_IDLE state, there is no link of the terminal device with the access network device and the core network, and when there is data to be transmitted, it is necessary to establish the link from the terminal device to the access network device and the core network.

By way of example, FIG. 4 is a schematic diagram of an RRC state transition provided by an embodiment of the present disclosure. As illustrated in FIG. 4, in the RRC_IDLE state, the terminal device may access the access network device, and during the access process or after the access to the access network device the terminal device may perform an RRC setup process with the access network device such that the state of the terminal device is transitioned from the RRC_IDLE state to the RRC_ CONNECTED state. In the RRC_IDLE state, after the terminal device receives a paging message from the access network device or after it is triggered by a higher level of the terminal device, the terminal device can initiate an RRC setup process to try to establish an RRC connection with the access network device to enter the RRC_CONNECTED state.

For example, the RRC setup process between the terminal device and the access network device includes: the terminal device sends an RRC Setup Request message to the access network device, and after receiving the request: the access network device sends an RRC Setup message to the terminal device, so that the state of the terminal device can be transitioned to the RRC_CONNECTED state; or, the access network device sends an RRC Reject message to the terminal device, so that the terminal device remains in the RRC_IDLE state.

When the terminal device is in the RRC_IDLE state, there is no RRC connection between the terminal device and the access network device. When the terminal device is in the RRC_CONNECTED state, the access network device may cause the state of the terminal device to transition from the RRC_CONNECTED state to the RRC_IDLE state or the RRC_INACTIVE state by releasing the RRC process, e.g., by sending an RRC Release message to the terminal device. When the terminal device is in the RRC_INACTIVE state, the terminal device can enter the RRC_IDLE state by releasing the RRC connection, or, the terminal device can enter the RRC_CONNECTED state by recovering the RRC connection.

By way of example, an RRC connection between the terminal device and the access network device exists when the terminal device is in the RRC_CONNECTED state. In this case, the access network device knows that the terminal device is within the coverage range of the access network device or within the management range of the access network device; the core network knows the terminal device is within the coverage range or the management range of which access network device, and the core network knows through which access network device the terminal device can be located or found.

In the RRC_INACTIVE state, the terminal device can cause the state of the terminal device to transition from the RRC_INACTIVE state to the RRC_CONNECTED state through the RRC setup or RRC resume process; the access network device can cause the state of the terminal device to transition from the RRC_INACTIVE state to the RRC_IDLE state through the RRC release process. In the RRC_INACTIVE state, after the terminal device receives a paging message from the access network device or after it is triggered by a higher level of the terminal device, the terminal device can initiate an RRC resume process to try to recover the RRC connection with the access network device to enter the RRC_CONNECTED state.

For example, the RRC resume process between the terminal device and the access network device includes: the terminal device sends an RRC Resume Request message to the access network device, and after receiving the request: the access network device sends an RRC Setup message or an RRC Resume message to the terminal device, so that the state of the terminal device can transition to the RRC_CONNECTED state; or the access network device sends an RRC Release message to the terminal device, so that the state of the terminal device transitions from the RRC_INACTIVE state to the RRC_IDLE state; or, the access network device sends an RRC Reject message to the terminal device, so that the terminal device remains in the RRC_INACTIVE state.

When the terminal device is in the RRC_INACTIVE state, there is no RRC connection between the terminal device and the access network device. In this case, the access network device does not know whether the terminal device is within the coverage range of the access network device or whether it is within the management range of the access network device; the core network knows the terminal device is within the coverage range or the management range of which access network device, and the core network knows through which access network device the terminal device can be located or found.

It should be noted that in the full description of the present disclosure, the terminal device being in a non-connected state may be that the terminal device is in an idle state, or that the terminal device is in an inactive state, or that it is in a state other than the connected state; the terminal device being in a non-connected state may be that the terminal device is in an idle state, or that the terminal device is in an inactive state, or that it is in a state other than the connected state.

In embodiments of the present disclosure, "configured to indicate" may include configured to directly indicate and configured to indirectly indicate. When describing that a particular piece of indication information is configured to indicate A, it may include that the indication information directly indicates A or indirectly indicates A, and does not mean that A is necessarily included in the indication information.

In embodiments of the present disclosure, the data of the SDT is the data transmitted through an SDT mechanism, which may refer to data of a user plane or may also refer to signaling of a control plane, such as uplink and downlink RRC messages, NAS messages, and/or LPP (LTE positioning protocol) messages, etc.

In embodiments of the present disclosure, a resource of the SDT or a configuration of the SDT may be MT-SDT, CG-SDT, RA-SDT, or SPS-SDT, etc.

A method and an apparatus for transmitting data provided by the present disclosure are described in detail below in conjunction with the accompanying drawings.

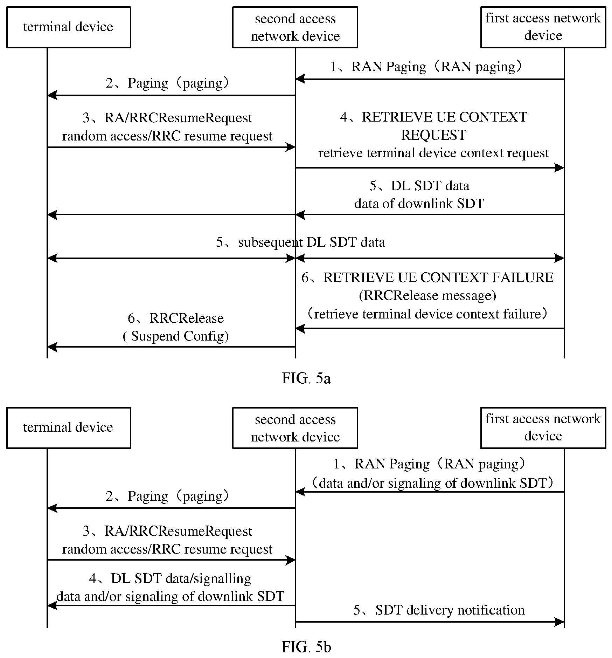

Referring to FIG. 5, FIG. 5 is a flowchart of a method for transmitting data provided by an embodiment of the present disclosure.

As illustrated in FIG. 5, the method is performed by a first node, and the method may include, but is not limited to, the following steps:

In S51: information of small data transmission (SDT) needing to be sent and/or received is determined, in which the information of the SDT includes data and/or signalling, the first node is a node that is incapable of determining whether a terminal device in a non-connected state is within its coverage range, or a node incapable of directly performing transceiving of uplink and downlink information with a terminal device in a non-connected state.

The signaling of the SDT includes, but is not limited to, non-access stratum (NAS) signaling, LTE Positioning Protocol (LPP) signaling, and/or RRC signaling, and the data of the SDT may be data from the user plane of the core network and/or data that the first node itself needs to send to the terminal device.

The first node determines the information of the SDT needing to be sent, it may determine the data of the SDT needing to be sent, or, determines the signaling of the SDT needing to be sent, or determines the data and signaling of the SDT needing to be sent. The first node determines information of the SDT needing to be received, it may determine the data of the SDT needing to be received, or, determine the signaling of the SDT needing to be received, or determine the data and signaling of the SDT needing to be received. The first node determines information of the SDT needing to be sent and received, it may determine the data of the SDT needing to be sent and received, or, determine the signaling of the SDT needing to be sent and received, or determine the data and signaling of the SDT needing to be sent and received.

It may be understood that the first node receives downlink data and/or downlink signaling to the terminal device from other nodes, or the first node decides on its own to send downlink data and/or downlink signaling to the terminal device, the first node may determine the information of the SDT needing to be sent to the terminal device.

It may be understood that the first node determines the information of the SDT needing to be sent and/or received, it may determine the information of the SDT needing to be sent to the terminal device in an non-connected state and/or, determine the information of the SDT needing to be received from the terminal device in the non-connected state.

In some embodiments, the first node may be an access network device, the access network device determines information of the SDT needing to be sent and/or received, it may determine the data and/or signaling of the SDT needing to be sent, and may determine the data and/or signaling of the SDT needing to be received.

The access network device may obtain the data and/or signaling of the SDT needing to be sent from a core network node to determine the data and/or signaling of the SDT needing to be sent, and the access network device may determine, according to the data and/or signaling of the SDT that it sends, whether there is data and/or signaling of the SDT needing to be received.

Of course, the access network device may also determine the data and/or signaling of the SDT to be sent, and/or determine the data and/or signaling of the SDT needing to be received, according to other information, which is not specifically limited by the embodiments of the present disclosure.

In other embodiments, the first node may be a core network node, e.g., an AMF (Access and Mobility Management Function), or a UPF (User Plane Function), or a SMF (Session Management Function), etc.

The core network node determines information of the SDT needing to be sent and/or received, it may determine the data and/or signaling of the SDT needing to be sent, and may determine the data and/or signaling of the SDT needing to be received.

The core network node may determine, according to its own information, the data and/or signaling of the SDT needing to be sent, and the core network node may determine, according to the data and/or signaling of the SDT that it sends, whether there is data and/or signaling of the SDT needing to be received.

Of course, the core network node may also determine the data and/or signaling of the SDT to be sent, and/or determine the data and/or signaling of the SDT needing to be received, according to other information, which is not specifically limited by the embodiments of the present disclosure.

In yet further embodiments, the first node may be a centralized unit (CU), or a centralized unit user plane (CU-UP). The CU or CU-UP determines information of the SDT needing to be sent and/or received, it may determine data and/or signaling of the SDT needing to be sent, and may determine data and/or signaling of the SDT needing to be received.

The CU or CU-UP may communicate with the core network node to obtain the data and/or signaling of the SDT needing to be sent from the core network node, to determine the data and/or signaling of the SDT needing to be sent, and the CU or CU-UP may determine, according to the data and/or signaling of the SDT that it sends, whether there is data and/or signaling of the SDT needing to be received.

Of course, the CU or CU-UP may also determine the data and/or signaling of the SDT to be sent, and/or determine the data and/or signaling of the SDT needing to be received, according to other information, which is not specifically limited by the embodiments of the present disclosure.

In S52: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

The first message may be a RAN Paging message sent by the first access network device to the second access network device, a Paging message sent by the CU or CU-CP to the DU, or a Paging message sent by the core network node to the access network device.

In embodiments of the present disclosure, the first node may be a node that is incapable of determining whether the terminal device in the non-connected state is within its coverage range, or, the first node may be a node incapable of directly performing transceiving of uplink and downlink information with a terminal device in the non-connected state.

In a case where the first node is a node that is incapable of determining whether the terminal device in the non-connected state is within its coverage range, the first node sends downlink information, and if the terminal device in the non-connected state is within the coverage range of the first node, it can be ensured that the downlink information can be accurately sent to the terminal device, but if the terminal device in the non-connected state is not within the coverage range of the first node, the downlink information will not be accurately sent to the terminal device. Similarly, for the uplink information sent by the terminal device in the non-connected state, if the terminal device in the non-connected state is within the coverage range of the first node, it can be ensured that the uplink information can be accurately sent to the first node, but if the terminal device in the non-connected state is not within the coverage range of the first node, the uplink information will not be accurately sent to the first node.

In embodiments of the present disclosure, in a case where the first node sends a first message to a second node, in which the first node may send a first message to one or more second nodes, and the first information is configured to indicate the second node to send and/or receive the information of the SDT according to the first information after receiving a first request message of the terminal device, a certain second node receives the first request message of the terminal device, and it can be determined that the second node can perform transceiving of the uplink and downlink data and/or signaling with the terminal device in the non-connected state, i.e., it can be determined that the terminal device in the non-connected state is within the coverage range of the second node, and based on this, the second node is indicated to send and/or receive the information of the SDT according to the first information, and the second node can accurately perform transceiving of the information of the SDT with the terminal device in the non-connected state, and can avoid transmission failure and resource waste.

In a case where the first node is a node incapable of directly performing transceiving of uplink and downlink information with the terminal device in the non-connected state, the first node is incapable of sending downlink information to the terminal device in the non-connected state or receive uplink information sent by the terminal device.

In embodiments of the present disclosure, in a case where the first node sends a first message to a second node, in which the first node may send a first message to one or more second nodes, and the first information is configured to indicate the second node to send and/or receive the information of the SDT according to the first information after receiving a first request message of the terminal device, a certain second node receives the first request message of the terminal device, and it can be determined that the second node can perform transceiving of the uplink and downlink data and/or signaling with the terminal device in the non-connected state, and based on this, the second node is indicated to send and/or receive the information of the SDT according to the first information, and the second node can accurately perform transceiving of the information of the SDT with the terminal device in the non-connected state, and can avoid transmission failure and resource waste.

Based on this, in embodiments of the present disclosure, the first node determines information of the small data transmission (SDT) needing to be sent and/or received, in which the information includes data and/or signaling; and sends a first message to the second node, in which the first message includes first information associated with the SDT of the terminal device in the non-connected state, the first information is configured to indicate the second node to send and/or receive information of the SDT according to the first information after receiving a first request message of from the terminal device. Thus, the second node may send and/or receive the information of the SDT needing to be sent and/or received by the first node, according to the first information. Hence, the first node can accurately perform the transceiving of the information of the SDT with the terminal device in the non-connected state, and can avoid transmission failure and resource waste.

By implementing embodiments of the present disclosure, the first node determines information of the small data transmission (SDT) needing to be sent and/or received, in which the information includes data and/or signaling, the first node is a node that is incapable of determining whether the terminal device in the non-connected state is within its coverage range or a node incapable of directly performing transceiving of uplink and downlink information with the terminal device in the non-connected state; and sends the first message to the second node, in which the first message includes first information associated with the SDT of the terminal device in the non-connected state, the first information is configured to indicate the second node to send and/or receive information of the SDT according to the first information after receiving the first request message of the terminal device. Hence, the first node can accurately perform the transceiving of the information of the SDT with the terminal device in the non-connected state, and can avoid transmission failure and resource waste.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In embodiments of the present disclosure, the first node sends a first message to the second node, and the first message includes first information associated with the SDT of the terminal device in the non-connected state, including the partial terminal device context information.

The partial terminal device context information is configured for transceiving of the information of the SDT of a paged terminal device, and may include configuration information associated with DRB (data radio bearer) and/or SRB (signaling radio bearer) for the SDT, and may include, for example, configuration information such as a transmission mode of an RLC (Radio Link Control) layer; and the second node may send information of a downlink SDT to the terminal device and/or receive information of an uplink SDT from the terminal device according to the partial terminal device context information, after receiving the partial terminal device context information, in which the information of the downlink SDT includes the data and/or signaling of the downlink SDT, and the information of the uplink SDT includes data and/or signaling of the uplink SDT.

In embodiments of the present disclosure, the first node sends a first message to the second node, and the first message includes first information associated with the SDT of the terminal device in the non-connected state, including an uplink TNL (UL transport network layer) information.

The uplink TNL information is configured to indicate information of a UP transport layer, and the second node may send information of the uplink SDT to the first node according to the uplink TNL information, in which the information of the uplink SDT includes data and/or signaling of the uplink SDT.

In embodiments of the present disclosure, the first node sends a first message to the second node, and the first message includes first information associated with the SDT of the terminal device in the non-connected state, including an MT-SDT manner.

The MT-SDT manner, e.g., 4-step RA-SDT, 2-step RA-SDT, CG-SDT, or SPS-SDT, may be considered by the second node, to configure a resource of SDT and/or prepare a resource associated with SDT for the terminal device.

In embodiments of the present disclosure, the first node sends a first message to the second node, and the first message includes first information associated with the SDT of the terminal device in the non-connected state, including an MT-SDT type.

The MT-SDT type may indicate whether the data or signaling for this SDT transmission is downlink and/or uplink, or the MT-SDT type may indicate whether the type of data for this SDT transmission is data or signaling, e.g., it may be any combination of following four types: only uplink (DL-only), uplink and downlink (DL+UL), signaling and/or data, etc., the second node may consider the MT-SDT type to configure a resource of the SDT and/or a resource associated with preparation of the SDT for the terminal device.

In embodiments of the present disclosure, the first node sends the first message to the second node, and the first message includes first information associated with the SDT of the terminal device in the non-connected state, including the uplink transmission characteristic of the terminal device.

The uplink transmission characteristic of the terminal device may be a data size or period of the uplink data or signaling of the terminal device, e.g., it may be a period and/or size of reporting of a QoE report or a period and/or size of reporting of positioning information of the terminal device, and the second node may consider the uplink transmission characteristic of the terminal device, to allocate a resource and configuration associated with the uplink SDT for the terminal device.

In embodiments of the present disclosure, the first node sends the first message to the second node, and the first message includes first information associated with the SDT of the terminal device in the non-connected state, including the downlink transmission characteristic of the terminal device.

In some embodiments, the downlink transmission characteristic of the terminal device may be a data size and/or period of the downlink data or signaling of the terminal device; in other embodiments, the downlink transmission characteristic of the terminal device may refer to whether the downlink data or signaling is single or multiple. The second node may consider the downlink transmission characteristic of the terminal device and allocate a resource and configuration associated with the downlink SDT for the terminal device.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In embodiments of the present disclosure, the second node receives the first message sent by the first node, obtains the first information in the first message, and may consider the first information to configure the resource of the SDT and/or prepare the resource associated with the SDT for the terminal device, e.g., establishing an SDT RLC entity.

In some embodiments, if the first node has a user plane function (e.g., access network device, UPF, gNB-CU-UP), the first node itself may obtain the downlink transmission characteristic of the terminal device through packet inspection identification; if the first node has a control plane function (e.g., base station, SMF/AMF, gNB-CU, or gNB-CU-CP), the downlink transmission characteristic of the terminal device may be sent to the first node by other nodes, such as AF (Application Function) to the AMF/SMF, or AMF/SMF to the access network device or gNB-CU or gNB-CU-CP, or UPF to the access network device or gNB-CU-UP.

In some embodiments, the first node receives a second message sent by the second node, in which the second message is sent by the second node after receiving the first request message sent by the terminal device, in which the second message includes second information associated with the SDT of the terminal device in the non-connected state, the second information is configured to request the first node to send information of the SDT to the second node, and the first request message is a response of the terminal device to paging of the second node.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node.

In embodiments of the present disclosure, the first request message may be a Random Access Request and/or an RRC Resume Request, and optionally, may also carry information of the uplink SDT, the information of the uplink SDT including data and/or signaling of the uplink SDT.

Based on this, the second node, after receiving the first request message sent by the terminal device in response to the paging, may send a second message to the first node, in which the second message includes second information associated with the SDT of the terminal device in the non-connected state, and the second information is configured to request the first node to send information of the SDT to the second node.

The second message may be a retrieve terminal device context request (RETRIEVE UE CONTEXT REQUEST) message sent by the second access network device to the first access network device, or an INITIAL UL RRC MESSAGE TRANSFER message or other F1AP message sent by the DU to the CU or the CU-CP, or an INITIAL UE CONTEXT REQUEST message or other NGAP message sent by the access network device to the core network node.

It may be understood that the second node sends a second message to the first node to inform the first node that the terminal device in the non-connected state is within the coverage range of the second node, and the second node may send the information of the downlink SDT to the terminal device, or, the second node receives the first request message sent by the terminal device, and the first request message carries the information of the uplink SDT; and the second message sent by the second node to the first node includes second information associated with the SDT of the terminal device in the non-connected state to send the information of the uplink SDT to the first node.

In some embodiments, the second information includes at least one of:
an MT-SDT indication; or
downlink transmission network layer (TNL) information.

In embodiments of the present disclosure, the second node sends the second message to the first node, the second message includes second information associated with the SDT of the terminal device in the non-connected state, and the second information includes an MT-SDT indication.

The MT-SDT indication is configured to indicate that the second message is initiated due to an MT-SDT, and for example it may be a resume cause or may be an MT-SDT.

In embodiments of the present disclosure, the second node sends the second message to the first node, the second message includes second information associated with the SDT of the terminal device in the non-connected state, and the second information includes downlink TNL information.

The downlink TNL information is configured to indicate information of the UP transport layer, and the first node may send information of the downlink SDT to the second node according to the downlink TNL information, in which the information of the downlink SDT includes data and/or signaling of the downlink SDT.

The downlink TNL information is sent in the second message, which enables the information of the downlink SDT to be sent to the terminal device faster.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first node sends information of the SDT to the second node according to the second message, in which the information of the SDT includes data and/or signaling of the downlink SDT.

In embodiments of the present disclosure, after receiving the second message sent by the second node, the first node may send information of the SDT to the second node according to the second message, in which the information of the SDT includes data and/or signaling of the downlink SDT.

Based on this, the second node may send the data and/or signaling of the downlink SDT to the terminal device in a case of receiving the data and/or signaling of the downlink SDT sent by the first node. Thus, the first node can accurately and efficiently perform transceiving of information of SDT with a terminal device in a non-connected state, and can avoid transmission failure and resource waste.

In some other embodiments, the first node sends third information to the second node, and the third information includes at least one of:
data of a downlink SDT;
signaling of a downlink SDT; or
data and signaling of a downlink SDT.

In embodiments of the present disclosure, the first node sends the third information to the second node, either at the same time as the first message, or before or after the first message.

In some embodiments, the third information is included in the first message and/or a third message.

It may be understood that the third information is included in the first message, and the third information is sent to the second node at the same time as the first message.

The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identify (UE RAN Paging Identity), configured to indicate the terminal device corresponding to the third information included in the third message.

In embodiments of the present disclosure, the first node sends the first message to the second node, and the first message includes first information associated with the SDT of the terminal device in the non-connected state, and further includes data of the downlink SDT.

In embodiments of the present disclosure, the first node sends the first message to the second node, and the first message includes first information associated with the SDT of the terminal device in the non-connected state, and further includes signaling of the downlink SDT.

In embodiments of the present disclosure, the first node sends the first message to the second node, and the first message includes first information associated with the SDT of the terminal device in the non-connected state, and further includes data and signaling of the downlink SDT.

It should be noted that the above embodiments are not exhaustive, but are only illustrative of some of the embodiments, and the above embodiments may be implemented individually or in combination, and above the embodiments are only illustrative and are not intended to be specific limitations on the scope of protection of the embodiments of the present disclosure.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

In some embodiments, the first node receives first indication information sent by the second node, in which the first indication information is configured to indicate that the second node completes sending of data and/or signaling of the downlink SDT to the terminal device.

In embodiments of the present disclosure, after the second node sends data and/or signaling of the downlink SDT to the terminal device, the first indication information may be sent to the first node, and the first indication information is configured to indicate that the second node completes sending of data and/or signaling of the downlink SDT to the terminal device.

In some embodiments, the first indication information includes at least one of:
identifier information of the terminal device;
an indication of successful sending to the terminal device;
an indication of unsuccessful sending to the terminal device; or
downlink TNL information.

In embodiments of the present disclosure, the second node sends the first indication information to the first node, and the first indication information may include the identifier information of the terminal device.

In embodiments of the present disclosure, the second node sends the first indication information to the first node, and the first indication information may include the indication of successful sending to the terminal device.

In embodiments of the present disclosure, the second node sends the first indication information to the first node, and the first indication information may include the indication of unsuccessful sending to the terminal device.

In embodiments of the present disclosure, the second node sends the first indication information to the first node, and the first indication information may include the downlink (DL) TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some other embodiments, the first node receives second indication information sent by the second node, in which the second indication information is sent by the second node in a case of receiving a response message sent by the terminal device, and the second indication information is configured to indicate that the second node successfully sends data and/or signaling of the downlink SDT to the terminal device.

In embodiments of the present disclosure, after the second node sends data and/or signaling of the downlink SDT to the terminal device, the terminal device may send a response message to the second node if it successfully receives the data and/or signaling of the downlink SDT sent by the second node, and the second node may receive the response message sent by the terminal device and determine that the terminal device successfully receives the data and/or signaling of the downlink SDT.

In this case, the second node sends second indication information to the first node, and the second indication information is configured to indicate that the second node successfully sends data and/or signaling of the downlink SDT to the terminal device.

In some embodiments, the second indication information includes at least one of:
identifier information of the terminal device;
an indication of successful sending to the terminal device;
an indication of unsuccessful sending to the terminal device; or
DL TNL information.

In embodiments of the present disclosure, the second node sends the second indication information to the first node, and the second indication information includes the identifier information of the terminal device.

In embodiments of the present disclosure, the second node sends the second indication information to the first node, and the second indication information includes the indication of successful sending to the terminal device.

In embodiments of the present disclosure, the second node sends the second indication information to the first node, and the second indication information includes the indication of unsuccessful sending to the terminal device.

In embodiments of the present disclosure, the second node sends the second indication information to the first node, and the second indication information includes the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first indication information and/or the second indication information may be an SDT delivery notification, the SDT delivery notification is configured to notify the first node whether the data and/or signaling of the downlink SDT is sent to the terminal device, and the first node may consider the SDT delivery notification to decide whether to continue paging the terminal device.

In some embodiments, in a case where the first node receives the first indication information and/or the second indication information sent by the second node, the first node may determine that transmission of the information of the downlink SDT is completed, and the first node may send a RETRIEVE UE CONTEXT FAILURE message to the second node in response to the first indication information and/or the second indication information of the second node, in which the RETRIEVE UE CONTEXT FAILURE message includes an encapsulated RRC Release message.

In some embodiments, the first node is a first access network device, the second node is a second access network device, the first access network device is an access network device last serving the terminal device, and the second access network device is an access network device currently serving the terminal device.

In embodiments of the present disclosure, the first node is a first access network device, which may be an access network device last serving the terminal device, and the first access network device (the access network device last serving the terminal device) sends an RRC Release message to the terminal device, causing the state of the terminal device to transition from a connected state (RRC_CONNECTED) to a non-connected state (the RRC_IDLE state or the RRC_INACTIVE state).

It may be understood that there is no RRC connection between the first access network device and the terminal device in the non-connected state, and the first access network device cannot determine whether the terminal device is within its coverage range at this time, i.e., the first access network device cannot determine whether the terminal device can receive the information sent to the terminal device by the first access network device, as well as cannot determine whether it can accurately receive the information sent by the terminal device.

In this case, the first access network device may determine the information of the SDT needing to be sent and/or received, and send the first message to one or more second access network devices; the first message includes first information associated with the SDT of the terminal device in the non-connected state, and the first information is configured to indicate the second access network device to send and/or receive the information of the SDT according to the first information, after receiving the first request message of the terminal device.

The second node is a second access network device, and the second access network device is an access network device currently serving the terminal device; the second access network device can receive the first request message sent by the terminal device, it is indicated that the terminal device in the non-connected state at this time is located in a coverage range of the second access network device, and the second access network device can perform transceiving of uplink and downlink information with the terminal device in the non-connected state, so that the second access network device may send the information of the SDT and/or receive the information of the SDT according to the first information. Hence, transmission failure and resource waste can be avoided.

In embodiments of the present disclosure, the first access network device serves as a node last serving the terminal device, the terminal device currently in the non-connected state is not within the coverage range of the first access network device, and the first access network device is a node incapable of directly performing transceiving of uplink and downlink information with the terminal device in the non-connected state. In embodiments of the present disclosure, the first access network device sends the first message to the second access network device, and the second access network device can receive the first request message sent by the terminal device, thus it is indicated that the terminal device in the non-connected state at this time is located in a coverage range of the second access network device, and the second access network device can perform transceiving of uplink and downlink information with the terminal device in the non-connected state, so that the second access network device may send the information of the SDT and/or receive the information of the SDT according to the first information. Hence, the first access network device incapable of determining whether the terminal device in the non-connected state is within its coverage range can perform transceiving of uplink and downlink information with the terminal device through the second access network device currently serving the terminal device, which can avoid transmission failure and resource waste.

In embodiments of the present disclosure, the first access network device may send the first message to the one or more second access network devices.

It may be understood that the second access network device can receive the first request message sent by the terminal device in the non-connected state when and only when the second access network device is an access network device currently serving the terminal device, i.e., when the terminal device in the non-connected state is located in a coverage range of the second access network device, i.e., the first access network device may send the first message to one or more second access network devices, and only one second access network device can receive the first request message of the terminal device; based on this, the second access network device sends and/or receives the information of the SDT according to the first information after receiving the first request message of the terminal device.

In some embodiments, the first message is at least one of:
a radio access network (RAN) paging message;
a partial terminal device context transmission message; or
an Xn application proposal (XnAP) message.

In embodiments of the present disclosure, in a case where the first node is a first access network device and the second node is a second access network device, the first access network device may send the first message to the second access network device, and the first message may be the radio access network (RAN) paging message.

In embodiments of the present disclosure, in a case where the first node is a first access network device and the second node is a second access network device, the first access network device may send the first message to the second access network device, and the first message may be the partial terminal device context transmission message.

In embodiments of the present disclosure, in a case where the first node is a first access network device and the second node is a second access network device, the first access network device may send the first message to the second access network device, and the first message may be the Xn application proposal (XnAP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second message is at least one of:
a retrieve terminal device context request message;
a partial terminal device context acknowledge message; or
an Xn application proposal (XnAP) message.

In embodiments of the present disclosure, the second node sends the second message to the first node, which may send the retrieve terminal device context request message to the first node.

In embodiments of the present disclosure, the second node sends the second message to the first node, which may send the partial terminal device context acknowledge message.

In embodiments of the present disclosure, the second node sends the second message to the first node, which may send the Xn application proposal (XnAP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

By implementing embodiments of the present disclosure, in a case where the first access network device is not an access network device last serving the terminal device, the terminal device is supported to receive downlink data and/or send uplink data in the RRC_INACTIVE state, and the first access network device can also configure appropriate resource for the terminal device according to the type and characteristic of the uplink/downlink data, which can reduce the unnecessary scheduling overhead and save air interface resource, and also save power for the terminal device.

In some embodiments, the first node is a core network node and the second node is an access network device.

In embodiments of the present disclosure, the first node is the core network node, and the core network node is incapable of performing transceiving of the uplink and downlink information directly with the terminal device in the non-connected state; and the second node is an access network device, and the access network device can perform transceiving of uplink and downlink information directly with the terminal device in the non-connected state.

In embodiments of the present disclosure, a core network node may determine information of the SDT needing to be sent and/or received, send the first message to the access network device, the first message includes first information associated with the SDT of the terminal device in the non-connected state, and the first information is configured to indicate the access network device to send and/or receive information of the SDT according to the first information after receiving the first request message of the terminal device.

The access network device can receive the first request message of the terminal device, thus it is indicated that the access network device can directly perform transceiving of uplink and downlink information with the terminal device in the non-connected state. Hence, a core network node incapable of directly performing transceiving of uplink and downlink information with the terminal device in the non-connected state can perform transceiving of uplink and downlink information with the terminal device through the access network device, which can avoid transmission failure and resource waste.

In some embodiments, the core network node is at least one of:
an access and mobility management function (AFM);
a session management function (SMF); or
a user plane function (UPF).

In embodiments of the present disclosure, the core network node may be the AMF.

In embodiments of the present disclosure, the core network node may be the SMF.

In embodiments of the present disclosure, the core network node may be the UPF.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first message is at least one of:
a next generation application proposal (NGAP) message; or
a message included in user plane data.

In embodiments of the present disclosure, in a case where the first node is a core network node and the second node is an access network device, the core network node sends a first message to the access network device, which may send the NGAP message, e.g., a Paging message, to the access network device.

In embodiments of the present disclosure, in a case where the first node is a core network node and the second node is an access network device, the core network node sends a first message to the access network device, which may send the message included in the user plane data to the access network device.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first node is a central unit user plane (CU-UP), and the second node is a central unit control plane (CU-CP).

In embodiments of the present disclosure, the first node is a CU-UP, and the CU-UP cannot directly perform transceiving of uplink and downlink information with the terminal device in the non-connected state, and the second node is a CU-CP, and the CU-CP can directly perform transceiving of uplink and downlink information with the terminal device in the non-connected state.

In embodiments of the present disclosure, the CU-UP may determine information of the SDT needing to be sent and/or received, send a first message to the CU-CP, the first message includes first information associated with the SDT of the terminal device in the non-connected state, and the first information is configured to indicate the CU-CP to send and/or receive the information of the SDT according to the first information after receiving the first request message of the terminal device.

The CU-CP can receive the first request message of the terminal device, thus it is indicated that the CU-CP can directly perform transceiving of uplink and downlink information with the terminal device in the non-connected state. Hence, the CU-UP incapable of directly performing transceiving of uplink and downlink information with the terminal device in the non-connected state can perform transceiving of uplink and downlink information with the terminal device through the CU-CP, which can avoid transmission failure and resource waste.

In some embodiments, the first message is at least one of:
a downlink data communication message;
a bearer context modification required message; or
an E1 application proposal (E1AP) message.

In embodiments of the present disclosure, in a case where the first node is a CU-UP and the second node is a CU-CP, the CU-UP sends a first message to the CU-CP, which may send the downlink (DL) data notification message to the CU-CP.

In embodiments of the present disclosure, in a case where the first node is a CU-UP and the second node is a CU-CP, the CU-UP sends a first message to the CU-CP, which may send the bearer context modification required message to the CU-CP.

In embodiments of the present disclosure, in a case where the first node is a CU-UP and the second node is a CU-CP, the CU-UP sends a first message to the CU-CP, which may send the E1 application proposal (E1AP) message to the CU-CP.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first node is a central unit (CU) or a CU-CP, and the second node is a distributed unit (DU).

In embodiments of the present disclosure, the first node is a CU or a CU-CP, the CU or the CU-CP cannot directly perform transceiving of uplink and downlink information with the terminal device in the non-connected state, and the second node is a DU, and the DU can directly perform transceiving of uplink and downlink information with the terminal device in the non-connected state.

In embodiments of the present disclosure, the CU or the CU-CP may determine information of the SDT needing to be sent and/or received, send a first message to the DU, the first message includes first information associated with the SDT of the terminal device in the non-connected state, and the first information is configured to indicate the DU to send and/or receive information of the SDT according to the first information after receiving the first request message of the terminal device.

The DU can receive the first request message of the terminal device, thus it is indicated that the DU can directly perform transceiving of uplink and downlink information with the terminal device in the non-connected state. Hence, the CU or CU-CP incapable of directly performing transceiving of uplink and downlink information with the terminal device in the non-connected state can perform transceiving of uplink and downlink information with the terminal device through the DU, which can avoid transmission failure and resource waste.

In some embodiments, the first message is at least one of:
a paging message;
a terminal device context modification request message;
a terminal device context setup request message; or
an F1 application proposal (F1AP) message.

In embodiments of the present disclosure, in a case where the first node is a CU or a CU-CP and the second node is a DU, the CU or the CU-CP sends a first message to the DU, which may send the paging message to the DU.

In embodiments of the present disclosure, in a case where the first node is a CU or a CU-CP and the second node is a DU, the CU or the CU-CP sends a first message to the DU, which may send the terminal device context modification request message (UE CONTEXT MODIFICATION REQUEST) to the DU.

In embodiments of the present disclosure, in a case where the first node is a CU or a CU-CP and the second node is a DU, the CU or the CU-CP sends a first message to the DU, which may send the terminal device context setup request message (UE CONTEXT SETUP REQUEST) to the DU.

In embodiments of the present disclosure, in a case where the first node is a CU or a CU-CP and the second node is a DU, the CU or the CU-CP sends a first message to the DU, which may send the F1 application proposal (F1AP) message to the DU.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second message is at least one of:
an SDT sending notification message;
an initial uplink RRC message transmission message; or
an F1 application proposal (F1AP) message.

In embodiments of the present disclosure, the second node sends a second message to the first node, and the second message may be the SDT sending notification message.

In embodiments of the present disclosure, the second node sends a second message to the first node, and the second message may be the initial uplink (UL) RRC message transmission message.

In embodiments of the present disclosure, the second node sends a second message to the first node, and the second message may be the F1 application proposal (F1AP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In order to facilitate understanding of the embodiments of the present disclosure, an illustrative embodiment is provided:

As illustrated in FIG. 5a, the first node is a first access network device last serving the terminal device, the terminal device currently in the non-connected state is within the coverage range of the second node, and the second node is a second access network device.

The first access network device cannot determine whether the terminal device in the non-connected state is within its coverage range, and in this case, 1) the first access network device may send a first message (RAN paging) to the second access network device, the first message includes first information associated with the SDT of the terminal device in the non-connected state, and the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

2) After receiving the RAN paging sent by the first access network device, the second access network device sends paging to the terminal device within its coverage range.

3) If the terminal device in the non-connected state is within the coverage range of the second access network device, the terminal device will send a first request message to the second access network device in response to the paging, and the first request message can be RA/RRC Resume Request, 4) the second access network device receives the first request message sent by the terminal device, and it can be determined that at this time the terminal device in the non-connected state is within its coverage range, the second access network device can perform transceiving of uplink and downlink information with the terminal device, and the second access network device sends a second message (RETRIEVE UE CONTEXT REQUEST message) to the first access network device to obtain information of the downlink SDT from the first access network device, in which the second message includes second information, and the second information includes at least one of:
an MT-SDT indication; or
downlink transmission network layer (TNL) information.

5) The first access network device sends information of the downlink SDT to the second access network device according to the second information in the RETRIEVE UE CONTEXT REQUEST message sent by the second access network device, and the second access network device may further send the information of the downlink SDT to the terminal device.

3) the first request message sent by the terminal device to the second access network device may carry the information of the uplink SDT, 5) the second access network device receives the first request message sent by the terminal device and may send the information of the uplink SDT to the first access network device.

Subsequently, after the transmission of the information of the SDT (including the information of the uplink SDT and/or the information of the downlink SDT) is completed, 6) the first access network device may send a RETRIEVE UE CONTEXT FAILURE message to the second access network device in response to the first access network device, in which the RETRIEVE UE CONTEXT FAILURE message includes an encapsulated RRC Release message. After receiving the RETRIEVE UE CONTEXT FAILURE message, the second access network device may send the RRC Release message to the terminal device, and the terminal device may remain in the non-connected state after receiving the RRC Release message.

It should be noted that the relevant descriptions of the first message, the second message, the first request message, and the like in the above illustrative embodiments can be found in the relevant descriptions in the above embodiments, which are herein provided as an understanding only, and are not to be taken as a specific limitation on the embodiments of the present disclosure.

In order to facilitate understanding of the embodiments of the present disclosure, another illustrative embodiment is provided:

As illustrated in FIG. 5b, the first node is a first access network device last serving the terminal device, the terminal device currently in the non-connected state is within the coverage range of the second node, and the second node is a second access network device.

The first access network device cannot determine whether the terminal device in the non-connected state is within its coverage range, and in this case, 1) the first access network device may send a first message (RAN paging) to the second access network device, the first message includes first information associated with the SDT of the terminal device in the non-connected state, and the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

2) After receiving the RAN paging sent by the first access network device, the second access network device sends paging to the terminal device within its coverage range.

3) If the terminal device in the non-connected state is within the coverage range of the second access network device, the terminal device will send a first request message to the second access network device in response to the paging, and the first request message can be RA/RRC Resume Request, 4) the second access network device receives the first request message sent by the terminal device, and it can be determined that at this time the terminal device in the non-connected state is within its coverage range, the second access network device can perform transceiving of uplink and downlink information with the terminal device, and the second access network device sends the data and/or signaling of the downlink SDT to the terminal device. 5) After the second access network device sends the data and/or signaling of the downlink SDT to the terminal device, it may send first indication information to the first access network device to inform the first access network device that the data and/or signaling of the downlink SDT is sent to the terminal device or, it may send second indication information to the first access network device to inform the first access network device that the data and/or signaling of the downlink SDT is successfully sent to the terminal device.

Optionally, the first indication information and the second indication information include DL TNL information so that the first network device sends subsequent information of a downlink SDT faster to the terminal device through the second network device.

It should be noted that the relevant descriptions of the first message, the second message, the first request message, and the like in the above illustrative embodiments can be found in the relevant descriptions in the above embodiments, which are herein provided as an understanding only, and are not to be taken as a specific limitation on the embodiments of the present disclosure.

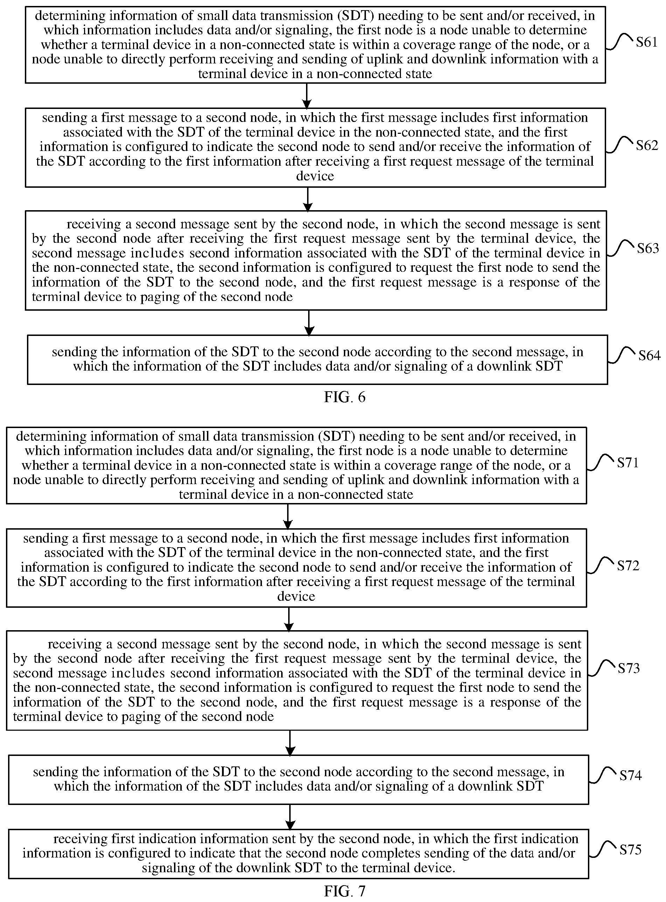

Referring to FIG. 6, FIG. 6 is a flowchart of another method for transmitting data transfer provided by an embodiment of the present disclosure.

As illustrated in FIG. 6, the method is performed by a first node, and the method may include, but is not limited to, the following steps:

In S61: information of small data transmission (SDT) needing to be sent and/or received is determined, in which the information includes data and/or signaling, the first node is a node that is incapable of determining whether a terminal device in a non-connected state is within its coverage range, or a node incapable of directly performing transceiving of uplink and downlink information with a terminal device in a non-connected state.

In S62: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

The relevant descriptions of S61 and S62 can be found in the above embodiments and are not repeated herein.

In S63, a second message sent by the second node is received, in which the second message is sent by the second node after receiving the first request message sent by the terminal device, in which the second message includes second information associated with the SDT of the terminal device in the non-connected state, the second information is configured to request the first node to send information of the SDT to the second node, and the first request message is a response of the terminal device to paging of the second node.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node.

In embodiments of the present disclosure, the first request message may be a Random Access Request and/or an RRC Resume Request, and optionally may also carry information of the uplink SDT, the information of the uplink SDT including data and/or signaling of the uplink SDT.

Based on this, the second node, after receiving the first request message sent by the terminal device in response to the paging, may send a second message to the first node, in which the second message includes second information associated with the SDT of the terminal device in the non-connected state, and the second information is configured to request the first node to send information of the SDT to the second node. The second message can be a RETRIEVE UE CONTEXT REQUEST message.

It may be understood that the second node sends a second message to the first node to inform the first node that the terminal device in the non-connected state is within the coverage range of the second node, and the second node may send the information of the downlink SDT to the terminal device, or, the second node receives the first request message sent by the terminal device, and the first request message carries the information of the uplink SDT; and the second message sent by the second node to the first node includes second information associated with the SDT of the terminal device in the non-connected state to send the information of the uplink SDT to the first node.

In some embodiments, the second information includes at least one of:
an MT-SDT indication; or
downlink transmission network layer (TNL) information.

In embodiments of the present disclosure, the second node sends the second message to the first node, the second message includes second information associated with the SDT of the terminal device in the non-connected state, and the second information includes an MT-SDT indication.

The MT-SDT indication is configured to indicate that the second message is initiated due to an MT-SDT, and for example it may be a resume cause or may be an MT-SDT.

In embodiments of the present disclosure, the second node sends the second message to the first node, the second message includes second information associated with the SDT of the terminal device in the non-connected state, and the second information includes downlink TNL information.

The downlink TNL information is configured to indicate information of the UP transport layer, and the first node may send information of the downlink SDT to the second node according to the downlink TNL information, in which the information of the downlink SDT includes data and/or signaling of the downlink SDT.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In S64: the information of the SDT is sent to the second node according to the second message, in which the information of the SDT includes data and/or signaling of the downlink SDT.

In embodiments of the present disclosure, after receiving the second message sent by the second node, the first node may send information of the SDT to the second node according to the second message, in which the information of the SDT includes data and/or signaling of the downlink SDT.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S61 to S63 may be implemented alone or in combination with any of the other steps in the embodiments of the present disclosure, for example, in combination with S51 and S52 in embodiments of the present disclosure, which are not limited by the embodiments of the present disclosure.

Referring to FIG. 7, FIG. 7 is a flowchart of yet another method for transmitting data provided by an embodiment of the present disclosure.

As illustrated in FIG. 7, the method is performed by a first node, and the method may include, but is not limited to, the following steps:

In S71: information of small data transmission (SDT) needing to be sent and/or received is determined, in which the information includes data and/or signaling, the first node is a node that is incapable of determining whether a terminal device in a non-connected state is within its coverage range, or a node incapable of directly performing transceiving of uplink and downlink information with a terminal device in a non-connected state.

In S72: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S73, a second message sent by the second node is received, in which the second message is sent by the second node after receiving the first request message sent by the terminal device, in which the second message includes second information associated with the SDT of the terminal device in the non-connected state, the second information is configured to request the first node to send information of the SDT to the second node, and the first request message is a response of the terminal device to paging of the second node.

In S74: the information of the SDT is sent to the second node according to the second message, in which the information of the SDT includes data and/or signaling of the downlink SDT.

The relevant descriptions of S71 to S74 can be found in the above embodiments and are not repeated here.

**In** S75: first indication information sent by the second node is received, in which the first indication information is configured to indicate that the second node completes sending of data and/or signaling of a downlink SDT

**In** embodiments of the present disclosure, after the second node sends data and/or signaling of the downlink SDT to the terminal device, the first indication information may be sent to the first node, and the first indication information is configured to indicate that the second node completes sending of data and/or signaling of the downlink SDT to the terminal device.

**In** some embodiments, the first indication information includes at least one of:
identifier information of the terminal device;
an indication of successful sending to the terminal device;
an indication of unsuccessful sending to the terminal device; or
DL TNL information.

**In** embodiments of the present disclosure, the second node sends the first indication information to the first node, and the first indication information may include the identifier information of the terminal device.

**In** embodiments of the present disclosure, the second node sends the first indication information to the first node, and the first indication information may include the indication of successful sending to the terminal device.

**In** embodiments of the present disclosure, the second node sends the first indication information to the first node, and the first indication information may include the indication of unsuccessful sending to the terminal device.

**In** embodiments of the present disclosure, the second node sends the first indication information to the first node, and the first indication information may include the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

**In** embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S71 to S75 in embodiments of the present disclosure may be implemented alone or in combination with any of the other steps in the embodiments of the present disclosure, for example, in combination with S51 and S52 and/or S61 to S63 in embodiments of the present disclosure, which are not limited by the embodiments of the present disclosure.

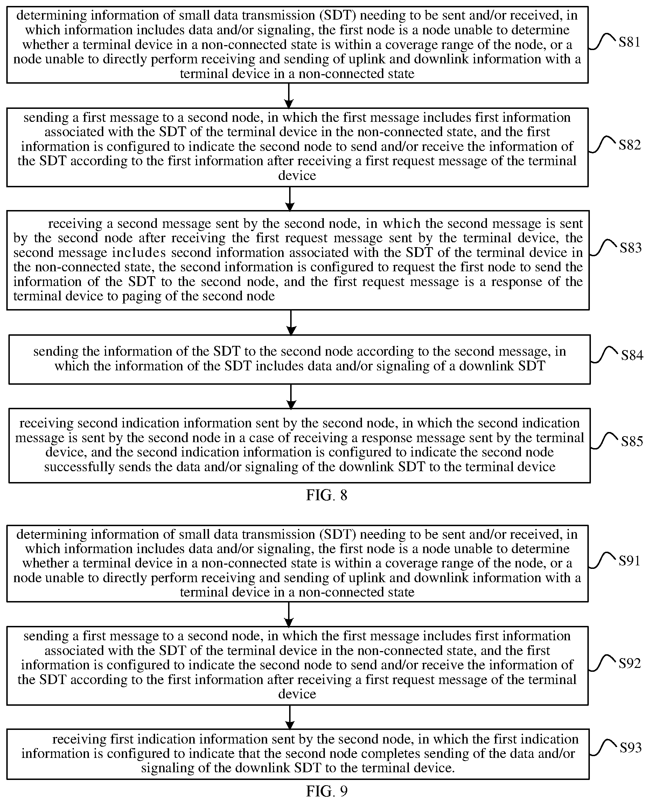

Referring to FIG. 8, FIG. 8 is a flowchart of yet another method for transmitting data provided by an embodiment of the present disclosure.

As illustrated in FIG. 8, the method is performed by a first node, and the method may include, but is not limited to, the following steps:

In S81: information of small data transmission (SDT) needing to be sent and/or received is determined, in which the information includes data and/or signaling, the first node is a node that is incapable of determining whether a terminal device in a non-connected state is within its coverage range, or a node incapable of directly performing transceiving of uplink and downlink information with a terminal device in a non-connected state.

In S82: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S83, a second message sent by the second node is received, in which the second message is sent by the second node after receiving the first request message sent by the terminal device, in which the second message includes second information associated with the SDT of the terminal device in the non-connected state, the second information is configured to request the first node to send information of the SDT to the second node, and the first request message is a response of the terminal device to paging of the second node.

In S84: the information of the SDT is sent to the second node according to the second message, in which the information of the SDT includes data and/or signaling of the downlink SDT.

The relevant descriptions of S81 to S84 can be found in the above embodiments and are not repeated herein.

In S85: second indication information sent by the second node is received, in which the second indication information is sent by the second node in a case of receiving a response message sent by the terminal device, and the second indication information is configured to indicate that the second node successfully sends the data and/or signaling of the downlink SDT to the terminal device.

In embodiments of the present disclosure, after the second node sends data and/or signaling of the downlink SDT to the terminal device, the terminal device may send a response message to the second node if it successfully receives the data and/or signaling of the downlink SDT sent by the second node, and the second node may receive the response message sent by the terminal device and determine that the terminal device successfully receives the data and/or signaling of the downlink SDT.

In this case, the second node sends second indication information to the first node, and the second indication information is configured to indicate that the second node successfully sends data and/or signaling of the downlink SDT to the terminal device.

In some embodiments, the second indication information includes at least one of:
identifier information of the terminal device;
an indication of successful sending to the terminal device;
an indication of unsuccessful sending to the terminal device; or
DL TNL information.

In embodiments of the present disclosure, the second node sends the second indication information to the first node, and the second indication information includes the identifier information of the terminal device.

In embodiments of the present disclosure, the second node sends the second indication information to the first node, and the second indication information includes the indication of successful sending to the terminal device.

In embodiments of the present disclosure, the second node sends the second indication information to the first node, and the second indication information includes the indication of unsuccessful sending to the terminal device.

In embodiments of the present disclosure, the second node sends the second indication information to the first node, and the second indication information includes the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S81 to S85 in embodiments of the present disclosure may be implemented alone or in combination with any of the other steps in the embodiments of the present disclosure, for example, in combination with S51 and S52 and/or S61 to S63 in embodiments of the present disclosure, which are not limited by the embodiments of the present disclosure.

Referring to FIG. 9, FIG. 9 is a flowchart of yet another method for transmitting data provided by an embodiment of the present disclosure.

As illustrated in FIG. 9, the method is performed by a first node, and the method may include, but is not limited to, the following steps:

In S91: information of small data transmission (SDT) needing to be sent and/or received is determined, in which the information includes data and/or signaling, the first node is a node that is incapable of determining whether a terminal device in a non-connected state is within its coverage range, or a node incapable of directly performing transceiving of uplink and downlink information with a terminal device in a non-connected state.

In S92: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

The relevant descriptions of S91 and S92 can be found in the above embodiments and are not repeated herein.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

The relevant descriptions of the first information and the first message can be found in the relevant descriptions in the above embodiments and are not repeated herein.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

In S93: first indication information sent by the second node is received, in which the first indication information is configured to indicate that the second node completes sending of data and/or signaling of a downlink SDT

The relevant description of S93 can be found in the above embodiments and is not repeated herein.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S91 to S93 may be implemented alone or in combination with any of the other steps in the embodiments of the present disclosure, for example, in combination with S51 and S52 in embodiments of the present disclosure, which are not limited by the embodiments of the present disclosure.

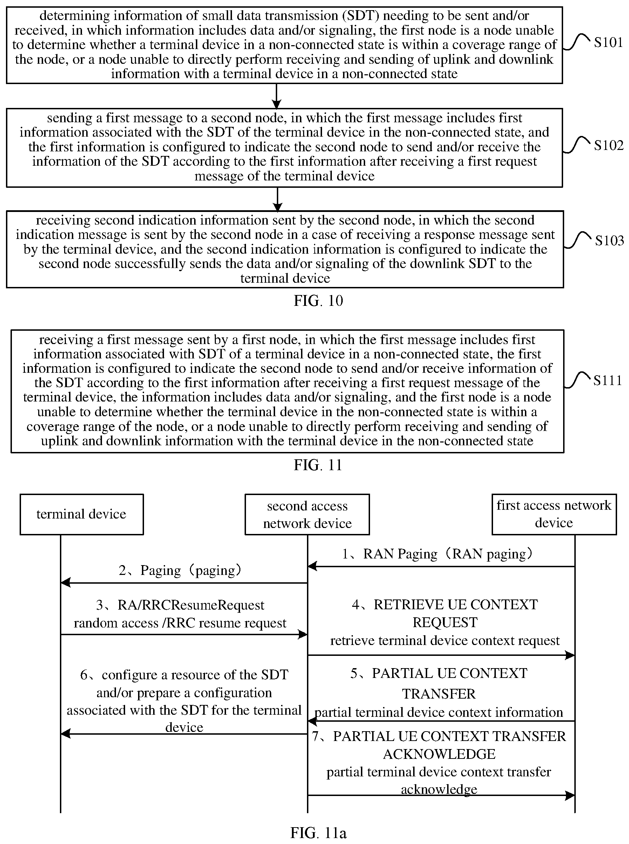

Referring to FIG. 10, FIG. 10 is a flowchart of yet another method for transmitting data provided by an embodiment of the present disclosure.

As illustrated in FIG. 10, the method is performed by a first node, and the method may include, but is not limited to, the following steps:

In S101: information of small data transmission (SDT) needing to be sent and/or received is determined, in which the information includes data and/or signaling, the first node is a node that is incapable of determining whether a terminal device in a non-connected state is within its coverage range, or a node incapable of directly performing transceiving of uplink and downlink information with a terminal device in a non-connected state.

In S102: a first message is sent to a second node, in which the first message includes first information associated with the SDT of the terminal device in the non-connected state, and the first information is configured to indicate the second node to send and/or receive the information of the SDT according to the first information after receiving a first request message of the terminal device.

The relevant descriptions of S101 and S102 can be found in the above embodiments and are not repeated herein.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

The relevant descriptions of the first information and the first message can be found in the relevant descriptions in the above embodiments and are not repeated herein.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

In S103: second indication information sent by the second node is received, in which the second indication information is sent by the second node in a case of receiving a response message sent by the terminal device, and the second indication information is configured to indicate that the second node successfully sends the data and/or signaling of the downlink SDT to the terminal device.

The relevant description of S103 can be found in the above embodiments and is not repeated herein.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S101 to S103 may be implemented alone or in combination with any of the other steps in the embodiments of the present disclosure, for example, in combination with S51 and S52 in embodiments of the present disclosure, which are not limited by the embodiments of the present disclosure.

Referring to FIG. 11, FIG. 11 is a flowchart of yet another method for transmitting data provided by an embodiment of the present disclosure.

As illustrated in FIG. 11, the method is performed by the second node, and the method may include, but is not limited to, the following steps:

S111: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

The first message may be a RAN Paging message sent by the first access network device to the second access network device, a Paging message sent by the CU or CU-CP to the DU, or a Paging message sent by the core network node to the access network device.

In embodiments of the present disclosure, the first node may be a node that is incapable of determining whether the terminal device in the non-connected state is within its coverage range, or, the first node may be a node incapable of directly performing transceiving of uplink and downlink information with a terminal device in the non-connected state.

In a case where the first node is a node that is incapable of determining whether the terminal device in the non-connected state is within its coverage range, the first node sends downlink information, and if the terminal device in the non-connected state is within the coverage range of the first node, it can be ensured that the downlink information can be accurately sent to the terminal device, but if the terminal device in the non-connected state is not within the coverage range of the first node, the downlink information will not be accurately sent to the terminal device. Similarly, for the uplink information sent by the terminal device in the non-connected state, if the terminal device in the non-connected state is within the coverage range of the first node, it can be ensured that the uplink information can be accurately sent to the first node, but if the terminal device in the non-connected state is not within the coverage range of the first node, the uplink information will not be accurately sent to the first node.

In embodiments of the present disclosure, in a case where the first node sends a first message to a second node, in which the first node may send a first message to one or more second nodes, and the first information is configured to indicate the second node to send and/or receive information of the SDT according to the first information after receiving the first request message of the terminal device; a certain second node receives the first request message of the terminal device, it can be determined that the second node can perform transceiving of uplink and downlink data with the terminal device in the non-connected state, i.e., it can be determined that the terminal device in the non-connected state is within the coverage range of the second node, and based on this, the second node is indicated to send and/or receive the information of the SDT according to the first information, can accurately perform transceiving of the information of the SDT with the terminal device in the non-connected state, and can avoid transmission failure and resource waste.

In a case where the first node is a node incapable of directly performing transceiving of uplink and downlink information with the terminal device in the non-connected state, the first node is incapable of sending downlink information to the terminal device in the non-connected state or receive uplink information sent by the terminal device.

In embodiments of the present disclosure, in a case where the first node sends a first message to a second node, in which the first node may send a first message to one or more second nodes, and the first information is configured to indicate the second node to send and/or receive information of the SDT according to the first information after receiving the first request message of the terminal device; a certain second node receives the first request message of the terminal device, it can be determined that the second node can perform transceiving of uplink and downlink data with the terminal device in the non-connected state, and based on this, the second node is indicated to send and/or receive the information of the SDT according to the first information, can accurately perform transceiving of the information of the SDT with the terminal device in the non-connected state, and can avoid transmission failure and resource waste.

Based on this, in embodiments of the present disclosure, the first node determines information of the small data transmission (SDT) needing to be sent and/or received, in which the information includes data and/or signaling; and sends a first message to the second node, in which the first message includes first information associated with the SDT of the terminal device in the non-connected state, the first information is configured to indicate the second node to send and/or receive information of the SDT according to the first information after receiving a first request message of from the terminal device. Thus, the second node may send and/or receive the information of the SDT needing to be sent and/or received by the first node, according to the first information. Hence, the first node can accurately perform the transceiving of the information of the SDT with the terminal device in the non-connected state, and can avoid transmission failure and resource waste.

In embodiments of the present disclosure, the first message is sent by the first node in a case of determining the information of the small data transmission (SDT) needing to be sent and/or received, in which the information includes data and/or signaling.

The first node determines the information of the SDT needing to be sent, it may determine the data of the SDT needing to be sent, or, determines the signaling of the SDT needing to be sent, or determines the data and signaling of the SDT needing to be sent.

The first node determines information of the SDT needing to be received, it may determine the data of the SDT needing to be received, or, determine the signaling of the SDT needing to be received, or determine the data and signaling of the SDT needing to be received.

The first node determines information of the SDT needing to be sent and received, it may determine the data of the SDT needing to be sent and received, or, determine the signaling of the SDT needing to be sent and received, or determine the data and signaling of the SDT needing to be sent and received.

It may be understood that the first node determines the information of the SDT needing to be sent and/or received, it may determine the information of the SDT needing to be sent to the terminal device in an non-connected state and/or, determine the information of the SDT needing to be received from the terminal device in the non-connected state.

In some embodiments, the first node may be an access network device, the access network device determines information of the SDT needing to be sent and/or received, it may determine the data and/or signaling of the SDT needing to be sent, and may determine the data and/or signaling of the SDT needing to be received.

The access network device may obtain the data and/or signaling of the SDT needing to be sent from a core network node to determine the data and/or signaling of the SDT needing to be sent, and the access network device may determine, according to the data and/or signaling of the SDT that it sends, whether there is data and/or signaling of the SDT needing to be received.

Of course, the access network device may also determine the data and/or signaling of the SDT to be sent, and/or determine the data and/or signaling of the SDT needing to be received, according to other information, which is not specifically limited by the embodiments of the present disclosure.

In other embodiments, the first node may be a core network node, e.g., an AMF (Core Access and Mobility Management Function), or a UPF (User Plane Function), or a SMF (Session Management Function), etc.

The core network node determines information of the SDT needing to be sent and/or received, it may determine the data and/or signaling of the SDT needing to be sent, and may determine the data and/or signaling of the SDT needing to be received.

The core network node may determine, according to its own information, the data and/or signaling of the SDT needing to be sent, and the core network node may determine, according to the data and/or signaling of the SDT that it sends, whether there is data and/or signaling of the SDT needing to be received.

Of course, the core network node may also determine the data and/or signaling of the SDT to be sent, and/or determine the data and/or signaling of the SDT needing to be received, according to other information, which is not specifically limited by the embodiments of the present disclosure.

In yet further embodiments, the first node may be a centralized unit (CU), or a centralized unit user plane (CU-UP). The CU or CU-UP determines information of the SDT needing to be sent and/or received, it may determine data and/or signaling of the SDT needing to be sent, and may determine data and/or signaling of the SDT needing to be received.

The CU or CU-UP may communicate with the core network node to obtain the data and/or signaling of the SDT needing to be sent from the core network node, to determine the data and/or signaling of the SDT needing to be sent, and the CU or CU-UP may determine, according to the data and/or signaling of the SDT that it sends, whether there is data and/or signaling of the SDT needing to be received.

Of course, the CU or CU-UP may also determine the data and/or signaling of the SDT to be sent, and/or determine the data and/or signaling of the SDT needing to be received, according to other information, which is not specifically limited by the embodiments of the present disclosure.

By implementing embodiments of the present disclosure, the first node determines information of the small data transmission (SDT) needing to be sent and/or received, in which the information includes data and/or signaling, the first node is a node that is incapable of determining whether the terminal device in the non-connected state is within its coverage range or a node incapable of directly performing transceiving of uplink and downlink information with the terminal device in the non-connected state; and sends the first message to the second node, in which the first message includes first information associated with the SDT of the terminal device in the non-connected state, the first information is configured to indicate the second node to send and/or receive information of the SDT according to the first information after receiving the first request message of the terminal device. Hence, the first node can accurately perform the transceiving of the information of the SDT with the terminal device in the non-connected state, and can avoid transmission failure and resource waste.

In some embodiments, the second node receives a first request message sent by the terminal device, in which the first request message is configured to indicate data and/or signaling of the uplink SDT.

In embodiments of the present disclosure, the second node receives a first message sent by the first node, in which the first message includes first information associated with the SDT of the terminal device in the non-connected state, the first information is configured to indicate the second node to send and/or receive information of the SDT according to the first information after receiving the first request message of the terminal device, and the information includes data and/or signaling.

The second node may send the data and/or signaling for the uplink SDT to the first node according to the first information in a case where the second node receives the first request message sent by the terminal device, and the first request message is configured to indicate the data and/or signaling of the uplink SDT. Hence, the first node can accurately perform the transceiving of the information of the SDT with the terminal device in the non-connected state, and can avoid transmission failure and resource waste.

In some embodiments, the second node sends a paging to the terminal device according to the first message; and receives the first request message sent by the terminal device, in which the first request message is a response of the terminal device to the paging of the second node.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node. The first request message may be a Random Access Request and/or an RRC Resume Request.

In embodiments of the present disclosure, the terminal device sends a first request message to the second node in response to the paging, optionally, the first request message may carry information of the uplink SDT, and the information of the uplink SDT includes data and/or signaling of the uplink SDT.

In this case, the second node receives the first request message sent by the terminal device and may send information of the uplink SDT to the first node, sending data and/or signaling of the uplink SDT to the first node.

In some embodiments, the second node configures a resource of the SDT for the terminal device according to the first information.

In embodiments of the present disclosure, the terminal device sends a first request message to the second node in response to the paging, optionally, the first request message may carry information of the uplink SDT, and the information of the uplink SDT includes data and/or signaling of the uplink SDT. The second node may configure the resource of the SDT for the terminal device according to the first request message and the first message. Hence, the second node can be allowed to configure an appropriate resource for the terminal device according to the type and characteristic of the uplink data, which can reduce unnecessary scheduling overhead, save air interface resource, and also save power for the terminal device.

In some embodiments, the first information associated with the SDT is released in response to not receiving the first request message sent by the terminal device.

In embodiments of the present disclosure, the second node receives the first message sent by the first node and sends a paging to the terminal device, and if the first request message sent by the terminal device is not received, it can be determined that the terminal device in the non-connected state is not within the coverage range of the second node, or the second node cannot directly perform transceiving of uplink and downlink information with the terminal device in the non-connected state; and in this case, the second node releases the first information associated with the SDT.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In embodiments of the present disclosure, the first node sends a first message to the second node, and the first message includes first information associated with the SDT of the terminal device in the non-connected state, including the partial terminal device context information.

The partial terminal device context information is configured for transceiving of information of the SDT of a paged terminal device, and may include configuration information associated with DRB (data radio bearer) and/or SRB (signaling radio bearer) for the SDT; and after receiving the partial terminal device context information, the second node may send the information of the downlink SDT to the terminal device and/or receive the information of the uplink SDT from the terminal device according to the partial terminal device context information, in which the information of the downlink SDT includes data and/or signaling of the downlink SDT, and the information of the uplink SDT includes data and/or signaling of the uplink SDT.

In embodiments of the present disclosure, the first node sends a first message to the second node, and the first message includes first information associated with the SDT of the terminal device in the non-connected state, including an uplink TNL (UL transport network layer) information.

The uplink TNL information is configured to indicate information of a UP transport layer, and the second node may send information of the uplink SDT to the first node according to the uplink TNL information, in which the information of the uplink SDT includes data and/or signaling of the uplink SDT.

In embodiments of the present disclosure, the first node sends a first message to the second node, and the first message includes first information associated with the SDT of the terminal device in the non-connected state, including an MT-SDT manner.

The MT-SDT manner, e.g., 4-step RA-SDT, 2-step RA-SDT, CG-SDT, or SPS-SDT, may be considered by the second node, to configure a resource of SDT and/or prepare a resource associated with SDT for the terminal device.

In embodiments of the present disclosure, the first node sends a first message to the second node, and the first message includes first information associated with the SDT of the terminal device in the non-connected state, including an MT-SDT type.

The MT-SDT type may indicate whether the data or signaling for this SDT transmission is downlink and/or uplink, or the MT-SDT type may indicate whether the type of data for this SDT transmission is data or signaling, e.g., it may be any combination of following four types: only uplink (DL-only), uplink and downlink (DL+UL), signaling and/or data, etc., the second node may consider the MT-SDT type to configure a resource of the SDT and/or a resource associated with preparation of the SDT for the terminal device.

In embodiments of the present disclosure, the first node sends the first message to the second node, and the first message includes first information associated with the SDT of the terminal device in the non-connected state, including the uplink transmission characteristic of the terminal device.

The uplink transmission characteristic of the terminal device may be a data size or period of the uplink data or signaling of the terminal device, which may be, for example, a period and size of reporting of the QoE report or a period and size of reporting of positioning information of the terminal device; and the second node may consider the uplink transmission characteristic of the terminal device and allocate a resource and configuration associated with the uplink SDT for the terminal device.

In embodiments of the present disclosure, the first node sends the first message to the second node, and the first message includes first information associated with the SDT of the terminal device in the non-connected state, including the downlink transmission characteristic of the terminal device.

In some embodiments, the downlink transmission characteristic of the terminal device may be a data size or period of the downlink data or signaling of the terminal device; in other embodiments, the downlink transmission characteristic of the terminal device may refer to whether the downlink data or signaling is single or multiple. The second node may consider the downlink transmission characteristic of the terminal device and allocate a resource and configuration associated with the downlink SDT for the terminal device.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In embodiments of the present disclosure, the second node receives the first message sent by the first node, obtains the first information in the first message, and may consider the first information to configure the resource of the SDT and/or prepare the resource associated with the SDT for the terminal device, e.g., establishing an SDT RLC entity.

In some embodiments, if the first node has a user plane function (e.g., access network device, UPF, gNB-CU-UP), the first node itself may obtain the downlink transmission characteristic of the terminal device through packet inspection identification; if the first node has a control plane function (e.g., base station, SMF/AMF, gNB-CU, or gNB-CU-CP, the downlink transmission characteristic of the terminal device may be sent to the first node by other nodes, such as AF (Application Function) to the AMF/SMF, or AMF/SMF to the access network device or gNB-CU or gNB-CU-CP, or UPF to the access network device or gNB-CU-UP.

In some embodiments, the second node sends a second message to the first node, in which the second message includes second information associated with the SDT of the terminal device in the non-connected state, and the second information is configured to request the first node to send information of the SDT to the second node.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node.

In embodiments of the present disclosure, the first request message may be a Random Access Request and/or an RRC Resume Request, and optionally may also carry information of the uplink SDT, the information of the uplink SDT including data and/or signaling of the uplink SDT.

Based on this, the second node, after receiving the first request message sent by the terminal device in response to the paging, may send a second message to the first node, in which the second message includes second information associated with the SDT of the terminal device in the non-connected state, and the second information is configured to request the first node to send information of the SDT to the second node. The second message can be a RETRIEVE UE CONTEXT REQUEST message.

It may be understood that the second node sends a second message to the first node to inform the first node that the terminal device in the non-connected state is within the coverage range of the second node, and the second node may send the information of the downlink SDT to the terminal device, or, the second node receives the first request message sent by the terminal device, and the first request message carries the information of the uplink SDT; and the second message sent by the second node to the first node includes second information associated with the SDT of the terminal device in the non-connected state to send the information of the uplink SDT to the first node.

In some embodiments, the second information includes at least one of:
an MT-SDT indication; or
downlink transmission network layer (TNL) information.

In embodiments of the present disclosure, the second node sends the second message to the first node, the second message includes second information associated with the SDT of the terminal device in the non-connected state, and the second information includes an MT-SDT indication.

The MT-SDT indication is configured to indicate that the second message is initiated due to an MT-SDT, and for example it may be a resume cause or may be an MT-SDT.

In embodiments of the present disclosure, the second node sends the second message to the first node, the second message includes second information associated with the SDT of the terminal device in the non-connected state, and the second information includes downlink TNL information.

The downlink TNL information is configured to indicate information of the UP transport layer, and the first node may send information of the downlink SDT to the second node according to the downlink TNL information, in which the information of the downlink SDT includes data and/or signaling of the downlink SDT.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second node receives information of the SDT sent by the first node, in which the information of the SDT is sent by the first node according to the second message, and the information of the SDT includes data and/or signaling of the downlink SDT.

In embodiments of the present disclosure, after receiving the second message sent by the second node, the first node may send information of the SDT to the second node according to the second message, in which the information of the SDT includes data and/or signaling of the downlink SDT.

Based on this, the second node may send the data and/or signaling of the downlink SDT to the terminal device in a case of receiving the data and/or signaling of the downlink SDT sent by the first node. Hence, the first node can accurately perform the transceiving of the information of the SDT with the terminal device in the non-connected state, and can avoid transmission failure and resource waste.

In other embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

In embodiments of the present disclosure, the first node sends the first message to the second node, and the first message includes first information associated with the SDT of the terminal device in the non-connected state, and also includes data of the downlink SDT.

In embodiments of the present disclosure, the first node sends a first message to the second node, and the first message includes first information associated with the SDT of the terminal device in the non-connected state, and also includes signaling of the downlink SDT.

In embodiments of the present disclosure, the first node sends a first message to the second node, and the first message includes first information associated with the SDT of the terminal device in the non-connected state, and also includes data and signaling of the downlink SDT.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

In some embodiments, the second node sends data and/or signaling of the downlink SDT to the terminal device.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

In some embodiments, the second node sends first indication information to the first node, in which the first indication information is configured to indicate that the second node completes sending of the data and/or signaling of the downlink SDT to the terminal device.

In embodiments of the present disclosure, after the second node sends data and/or signaling of the downlink SDT to the terminal device, the first indication information may be sent to the first node, and the first indication information is configured to indicate that the second node completes sending of data and/or signaling of the downlink SDT to the terminal device.

In some embodiments, the first indication information includes at least one of:
identifier information of the terminal device;
an indication of successful sending to the terminal device;
an indication of unsuccessful sending to the terminal device; or
DL TNL information.

In embodiments of the present disclosure, the second node sends the first indication information to the first node, and the first indication information may include the identifier information of the terminal device.

In embodiments of the present disclosure, the second node sends the first indication information to the first node, and the first indication information may include the indication of successful sending to the terminal device.

In embodiments of the present disclosure, the second node sends the first indication information to the first node, and the first indication information may include the indication of unsuccessful sending to the terminal device.

In embodiments of the present disclosure, the second node sends the first indication information to the first node, and the first indication information may include the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second node receives a response message sent by the terminal device, in which the response message is configured to indicate that the terminal device receives data and/or signaling of the downlink SDT.

In some embodiments, the second node sends second indication information to the first node, in which the second indication information is configured to indicate that the second node successfully sends data and/or signaling of the downlink SDT to the terminal device.

In embodiments of the present disclosure, after the second node sends data and/or signaling of the downlink SDT to the terminal device, the terminal device may send a response message to the second node if it successfully receives the data and/or signaling of the downlink SDT sent by the second node, and the second node may receive the response message sent by the terminal device and determine that the terminal device successfully receives the data and/or signaling of the downlink SDT.

In this case, the second node sends second indication information to the first node, and the second indication information is configured to indicate that the second node successfully sends data and/or signaling of the downlink SDT to the terminal device.

In some embodiments, the second indication information includes at least one of:
identifier information of the terminal device;
an indication of successful sending to the terminal device;
an indication of unsuccessful sending to the terminal device; or
DL TNL information.

In embodiments of the present disclosure, the second node sends the second indication information to the first node, and the second indication information includes the identifier information of the terminal device.

In embodiments of the present disclosure, the second node sends the second indication information to the first node, and the second indication information includes the indication of successful sending to the terminal device.

In embodiments of the present disclosure, the second node sends the second indication information to the first node, and the second indication information includes the indication of unsuccessful sending to the terminal device.

In embodiments of the present disclosure, the second node sends the second indication information to the first node, and the second indication information includes the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first indication information and/or the second indication information may be an SDT delivery notification, the SDT delivery notification is configured to notify the first node whether the data and/or signaling of the downlink SDT is sent to the terminal device, and the first node may consider the SDT delivery notification to decide whether to continue paging the terminal device.

In some embodiments, in a case where the first node receives the first indication information and/or the second indication information sent by the second node, the first node may determine that transmission of the information of the downlink SDT is completed, and the first node may send a RETRIEVE UE CONTEXT FAILURE message to the second node in response to the first indication information and/or the second indication information of the second node, in which the RETRIEVE UE CONTEXT FAILURE message includes an encapsulated RRC Release message.

In some embodiments, the first node is a first access network device, the second node is a second access network device, the first access network device is an access network device last serving the terminal device, and the second access network device is an access network device currently serving the terminal device.

In embodiments of the present disclosure, the first node is a first access network device, which may be an access network device last serving the terminal device, and the first access network device (the access network device last serving the terminal device) sends an RRC Release message to the terminal device, causing the state of the terminal device to transition from a connected state (RRC_CONNECTED) to a non-connected state (the RRC _IDLE state or the RRC_INACTIVE state).

It may be understood that there is no RRC connection between the first access network device and the terminal device in the non-connected state, and the first access network device cannot determine whether the terminal device is within the coverage range of the first access network device at this time, i.e., the first access network device cannot determine whether the information sending to the terminal device by the first access network device can be received by the terminal device, as well as whether the information sent by the terminal device can be accurately received.

In this case, the first access network device may determine the information of the SDT needing to be sent and/or received, and send the first message to one or more second access network devices; the first message includes first information associated with the SDT of the terminal device in the non-connected state, the first information is configured to indicate the second access network device to send and/or receive the information of the SDT according to the first information after receiving the first request message of the terminal device.

The second node is the second access network device, and the second access network device is an access network device currently serving the terminal device; and the second access network device may receive the first request message sent by the terminal device, then it is indicated that the terminal device in the non-connected state is located in a coverage range of the second access network device at this time, and the second access network device may perform transceiving of uplink and downlink information with the terminal device in the non-connected state, so that the second access network device may send the information of the SDT and/or receive the information of the SDT according to the first information. Hence, transmission failure and resource waste can be avoided.

In embodiments of the present disclosure, the first access network device serves as a node last serving the terminal device, and the terminal device currently in the non-connected state is not within the coverage range of the first access network device, and the first access network device is a node incapable of directly performing transceiving of uplink and downlink information with the terminal device in the non-connected state. In embodiments of the present disclosure, the first access network device sends the first message to the second access network device, and the second access network device can receive the first request message sent by the terminal device, thus it is indicated that the terminal device in the non-connected state at this time is located in a coverage range of the second access network device, and the second access network device can perform transceiving of uplink and downlink information with the terminal device in the non-connected state, so that the second access network device may send the information of the SDT and/or receive the information of the SDT according to the first information. Hence, the first access network device incapable of determining whether the terminal device in the non-connected state is within the coverage range of the first access network device can perform transceiving of the uplink and downlink information with the terminal device through the second access network device currently serving the terminal device, which can avoid transmission failure and resource waste.

In embodiments of the present disclosure, the first access network device may send the first message to the one or more second access network devices.

It may be understood that the second access network device can receive the first request message sent by the terminal device in the non-connected state when and only when the second access network device is an access network device currently serving the terminal device, i.e., when the terminal device in the non-connected state is located in a coverage range of the second access network device, i.e., the first access network device may send the first message to one or more second access network devices, and only one second access network device can receive the first request message of the terminal device; based on this, the second access network device sends and/or receives the information of the SDT according to the first information after receiving the first request message of the terminal device.

In some embodiments, the first message is at least one of:
a radio access network (RAN) paging message;
a partial terminal device context transmission message; or
an Xn application proposal (XnAP) message.

In embodiments of the present disclosure, in a case where the first node is a first access network device and the second node is a second access network device, the first access network device may send the first message to the second access network device, and the first message may be the radio access network (RAN) paging message.

In embodiments of the present disclosure, in a case where the first node is a first access network device and the second node is a second access network device, the first access network device may send the first message to the second access network device, and the first message may be the partial terminal device context transmission message.

In embodiments of the present disclosure, in a case where the first node is a first access network device and the second node is a second access network device, the first access network device may send the first message to the second access network device, and the first message may be the Xn application proposal (XnAP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second message is at least one of:
a retrieve terminal device context request message;
a partial terminal device context acknowledge message; or
an Xn application proposal (XnAP) message.

In embodiments of the present disclosure, the second node sends the second message to the first node, which may send the retrieve terminal device context request message to the first node.

In embodiments of the present disclosure, the second node sends the second message to the first node, which may send the partial terminal device context acknowledge message.

In embodiments of the present disclosure, the second node sends the second message to the first node, which may send the Xn application proposal (XnAP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

By implementing embodiments of the present disclosure, in a case where the first access network device is not an access network device last serving the terminal device, the terminal device is supported to receive downlink data and/or send uplink data in the RRC_INACTIVE state, and the first access network device can also configure appropriate resource for the terminal device according to the type and characteristic of the uplink/downlink data, which can reduce the unnecessary scheduling overhead and save air interface resource, and also save power for the terminal device.

In some embodiments, the first node is a core network node and the second node is an access network device.

In embodiments of the present disclosure, the first node is the core network node, and the core network node is incapable of performing transceiving of the uplink and downlink information directly with the terminal device in the non-connected state; and the second node is an access network device, and the access network device can perform transceiving of uplink and downlink information directly with the terminal device in the non-connected state.

In embodiments of the present disclosure, a core network node may determine information of the SDT needing to be sent and/or received, and send a first message to an access network device; the first message includes first information associated with the SDT of the terminal device in the non-connected state, and the first information is configured to indicate the access network device to send and/or receive information of the SDT according to the first information after receiving the first request message of the terminal device.

The access network device can receive the first request message of the terminal device, thus it is indicated that the access network device can perform transceiving of uplink and downlink information directly with the terminal device in the non-connected state. Hence, a core network node incapable of performing transceiving of uplink and downlink information directly with the terminal device in the non-connected state can perform transceiving of uplink and downlink information with the terminal device through the access network device, which can avoid transmission failure and resource waste.

In some embodiments, the core network node is at least one of:
an access and mobility management function (AFM);
a session management function (SMF); or
a user plane function (UPF).

In embodiments of the present disclosure, the core network node may be the AMF.

In embodiments of the present disclosure, the core network node may be the SMF.

In embodiments of the present disclosure, the core network node may be the UPF.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first message is at least one of:
a next generation application proposal (NGAP) message; or
a message included in user plane data.

In embodiments of the present disclosure, in a case where the first node is a core network node and the second node is an access network device, the core network node sends a first message to the access network device, which may send the NGAP message, e.g., a Paging message, to the access network device.

In embodiments of the present disclosure, in a case where the first node is a core network node and the second node is an access network device, the core network node sends a first message to the access network device, which may send the message included in the user plane data to the access network device.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first node is a central unit user plane (CU-UP), and the second node is a central unit control plane (CU-CP).

In embodiments of the present disclosure, the first node is a CU-UP, and the CU-UP cannot directly perform transceiving of uplink and downlink information with the terminal device in the non-connected state, and the second node is a CU-CP, and the CU-CP can directly perform transceiving of uplink and downlink information with the terminal device in the non-connected state.

In embodiments of the present disclosure, the CU-UP may determine the information of the SDT needing to be sent and/or received, and send a first message to the CU-CP; and the first message includes first information associated with the SDT of the terminal device in the non-connected state, and the first information is configured to indicate the CU-CP to send and/or receive the information of the SDT according to the first information after receiving the first request message of the terminal device.

The CU-CP can receive the first request message of the terminal device, thus it is indicated that the CU-CP can directly perform transceiving of uplink and downlink information with the terminal device in the non-connected state. Hence, the CU-UP incapable of directly performing transceiving of uplink and downlink information with the terminal device in the non-connected state can perform transceiving of uplink and downlink information with the terminal device through the CU-CP, which can avoid transmission failure and resource waste.

In some embodiments, the first message is at least one of:
a downlink data communication message;
a bearer context modification required message; or
an E1 application proposal (E1AP) message.

In embodiments of the present disclosure, in a case where the first node is a CU-UP and the second node is a CU-CP, the CU-UP sends a first message to the CU-CP, which may send the downlink (DL) data notification message to the CU-CP.

In embodiments of the present disclosure, in a case where the first node is a CU-UP and the second node is a CU-CP, the CU-UP sends a first message to the CU-CP, which may send the bearer context modification required message to the CU-CP.

In embodiments of the present disclosure, in a case where the first node is a CU-UP and the second node is a CU-CP, the CU-UP sends a first message to the CU-CP, which may send the E1 application proposal (E1AP) message to the CU-CP.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the first node is a central unit (CU) or a CU-CP, and the second node is a distributed unit (DU).

In embodiments of the present disclosure, the first node is a CU or a CU-CP, the CU or the CU-CP cannot directly perform transceiving of uplink and downlink information with the terminal device in the non-connected state, and the second node is a DU, and the DU can directly perform transceiving of uplink and downlink information with the terminal device in the non-connected state.

In embodiments of the present disclosure, the CU or the CU-CP may determine information of the SDT needing to be sent and/or received, and send a first message to the DU; and the first message includes first information associated with the SDT of the terminal device in the non-connected state, and the first information is configured to indicate the DU to send and/or receive information of the SDT according to the first information after receiving the first request message of the terminal device.

The DU can receive the first request message of the terminal device, thus it is indicated that the DU can directly perform transceiving of uplink and downlink information with the terminal device in the non-connected state. Hence, the CU or CU-CP incapable of directly performing transceiving of uplink and downlink information with the terminal device in the non-connected state can perform transceiving of uplink and downlink information with the terminal device through the DU, which can avoid transmission failure and resource waste.

In some embodiments, the first message is at least one of:
a paging message;
a terminal device context modification request message;
a terminal device context setup request message; or
an F1 application proposal (F1AP) message.

In embodiments of the present disclosure, in a case where the first node is a CU or a CU-CP and the second node is a DU, the CU or the CU-CP sends a first message to the DU, which may send the paging message to the DU.

In embodiments of the present disclosure, in a case where the first node is a CU or a CU-CP and the second node is a DU, the CU or the CU-CP sends a first message to the DU, which may send the terminal device context modification request message (UE CONTEXT MODIFICATION REQUEST) to the DU.

In embodiments of the present disclosure, in a case where the first node is a CU or a CU-CP and the second node is a DU, the CU or the CU-CP sends a first message to the DU, which may send the terminal device context setup request message (UE CONTEXT SETUP REQUEST) to the DU.

In embodiments of the present disclosure, in a case where the first node is a CU or a CU-CP and the second node is a DU, the CU or the CU-CP sends a first message to the DU, which may send the F1 application proposal (F1AP) message to the DU.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the second message is at least one of:
an SDT sending notification message;
an initial uplink RRC message transmission message; or
an F1 application proposal (F1AP) message.

In embodiments of the present disclosure, the second node sends a second message to the first node, and the second message may be the SDT sending notification message.

In embodiments of the present disclosure, the second node sends a second message to the first node, and the second message may be the initial UL RRC message transmission message.

In embodiments of the present disclosure, the second node sends a second message to the first node, and the second message may be the F1 application proposal (F1AP) message.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In order to facilitate understanding of the embodiments of the present disclosure, an illustrative embodiment is provided:

As illustrated in FIG. 11a, the first node is a first access network device last serving the terminal device, the terminal device currently in the non-connected state is within the coverage range of the second node, and the second node is a second access network device.

The first access network device cannot determine whether the terminal device in the non-connected state is within its coverage range, and in this case, 1) the first access network device may send a RAN paging to the second access network device, the first message includes first information associated with the SDT of the terminal device in the non-connected state, and the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

2) After receiving the RAN paging sent by the first access network device, the second access network device sends paging to the terminal device within its coverage range.

3) If the terminal device in the non-connected state is within the coverage range of the second access network device, the terminal device sends a first request message to the second access network device in response to the paging, and the first request message can be RA/RRC Resume Request; 4) the second access network device receives the first request message sent by the terminal device, and it can be determined that at this time the terminal device in the non-connected state is in its coverage range, the second access network device can perform transceiving of uplink and downlink information with the terminal device, and the second access network device sends a second message (RETRIEVE UE CONTEXT REQUEST message) to the first access network device to obtain information of the downlink SDT from the first access network device, in which the second message includes second information, and the second information includes at least one of:
an MT-SDT indication; or
downlink transmission network layer (TNL) information.

5) The first access network device sends a partial terminal device context transfer message (PARTIAL UE CONTEXT TRANSFER message) to a second access network device access network device, in which the partial terminal device context transfer message includes at least one of:
partial terminal device context information;
uplink transmission network layer (TNL) information;
an uplink transmission characteristic of the terminal device; or
a downlink transmission characteristic of the terminal device.

6) After receiving the partial terminal device context message sent by the first access network device, the second access network device may configure the resource of the SDT and/or configure the configuration associated with preparation of the SDT for the terminal device according to the partial terminal device context message.

7) After receiving the partial terminal device context transfer message sent by the first access network device, the second access network device may send a partial terminal device context transfer acknowledge (PARTIAL UE CONTEXT TRANSFER ACKNOWLEDGE) message to the first access network device to inform the first access network device that it receives the partial terminal device context transfer message.

It should be noted that the relevant descriptions of the first message, the second message, the first request message, and the like in the above illustrative embodiments can be found in the relevant descriptions in the above embodiments, which are herein provided as an understanding only, and are not to be taken as a specific limitation on the embodiments of the present disclosure.

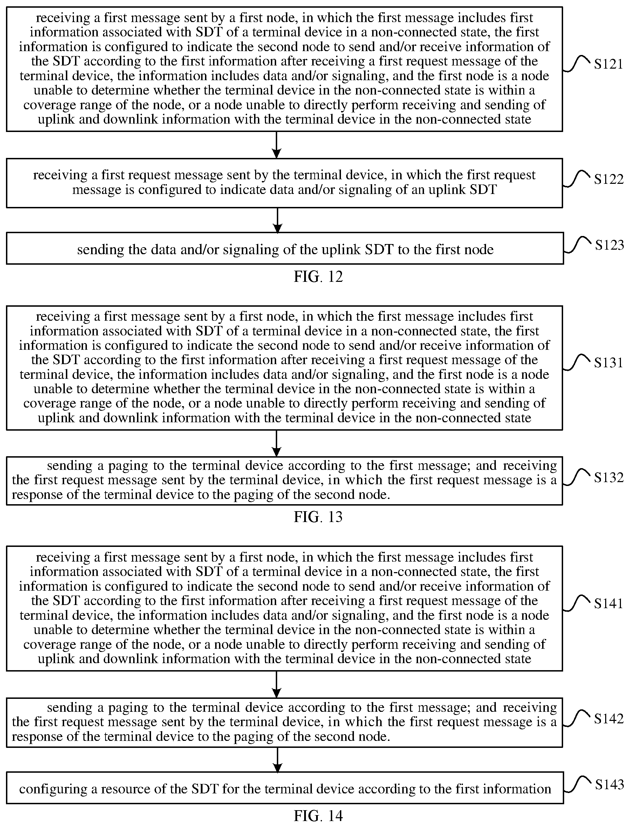

Referring to FIG. 12, FIG. 12 is a flowchart of yet another method for transmitting data provided by an embodiment of the present disclosure.

As illustrated in FIG. 12, the method is performed by the second node, and the method may include, but is not limited to, the following steps:

S121: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

The relevant description of S121 can be found in the above embodiments and is not repeated herein.

In S122: a first request message sent by the terminal device is received, in which the first request message is configured to indicate data and/or signaling of the uplink SDT.

In S123: the data and/or signaling of the uplink SDT is sent to the first node.

In embodiments of the present disclosure, the second node receives a first message sent by the first node, in which the first message includes first information associated with the SDT of the terminal device in the non-connected state, the first information is configured to indicate the second node to send and/or receive information of the SDT according to the first information after receiving the first request message of the terminal device, and the information includes data and/or signaling.

The second node may send the data and/or signaling for the uplink SDT to the first node according to the first information in a case where the second node receives the first request message sent by the terminal device, and the first request message is configured to indicate the data and/or signaling of the uplink SDT. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in the embodiments of the present disclosure, S121 to S123 may be implemented alone or in combination with any of the other steps in the embodiments of the present disclosure, for example, in combination with S111 in embodiments of the present disclosure, which are not limited by the embodiments of the present disclosure.

Referring to FIG. 13, FIG. 13 is a flowchart of yet another method for transmitting data provided by an embodiment of the present disclosure.

As illustrated in FIG. 13, the method is performed by the second node, and the method may include, but is not limited to, the following steps:

S131: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

The relevant description of S131 can be found in the above embodiments and is not repeated herein.

In S132: a paging is sent to the terminal device according to the first message; and a first request message sent by the terminal device is received, in which the first request message is a response of the terminal device to the paging of the second node.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node. The first request message may be a Random Access Request and/or an RRC Resume Request.

In embodiments of the present disclosure, the terminal device sends a first request message to the second node in response to the paging, optionally, the first request message may carry information of the uplink SDT, and the information of the uplink SDT includes data and/or signaling of the uplink SDT.

In this case, the second node receives the first request message sent by the terminal device and may send information of the uplink SDT to the first node, sending data and/or signaling of the uplink SDT to the first node.

The relevant descriptions of the first node and the second node can be found in the above embodiments and are not repeated herein.

It should be noted that S131 to S132 in embodiments of the present disclosure may be implemented alone or in combination with any of the other steps in the embodiments of the present disclosure, for example in combination with S111 and/or S121 to S123 in embodiments of the present disclosure, which are not limited by the embodiments of the present disclosure.

Referring to FIG. 14, FIG. 14 is a flowchart of yet another method for transmitting data provided by an embodiment of the present disclosure.

As illustrated in FIG. 14, the method is performed by the second node, and the method may include, but is not limited to, the following steps:

S141: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S142: a paging is sent to the terminal device according to the first message; and a first request message sent by the terminal device is received, in which the first request message is a response of the terminal device to the paging of the second node.

The relevant descriptions of S141 and S142 can be found in the above embodiments and are not repeated herein.

In S143: a resource of the SDT is configured for the terminal device according to the first information.

In embodiments of the present disclosure, the terminal device sends a first request message to the second node in response to the paging, optionally, the first request message may carry information of the uplink SDT, and the information of the uplink SDT includes data and/or signaling of the uplink SDT. The second node may configure the resource of the SDT for the terminal device according to the first request message and the first message. Hence, the second node can be allowed to configure an appropriate resource for the terminal device according to the type and characteristic of the uplink data, which can reduce unnecessary scheduling overhead, save air interface resource, and also save power for the terminal device.

The relevant descriptions of the first node and the second node can be found in the above embodiments and are not repeated herein.

It should be noted that S141 to S143 in embodiments of the present disclosure may be implemented alone or in combination with any of the other steps in the embodiments of the present disclosure, for example in combination with S111 and/or S121 to S123 and/or S131 to S132 in embodiments of the present disclosure, which are not limited by the embodiments of the present disclosure.

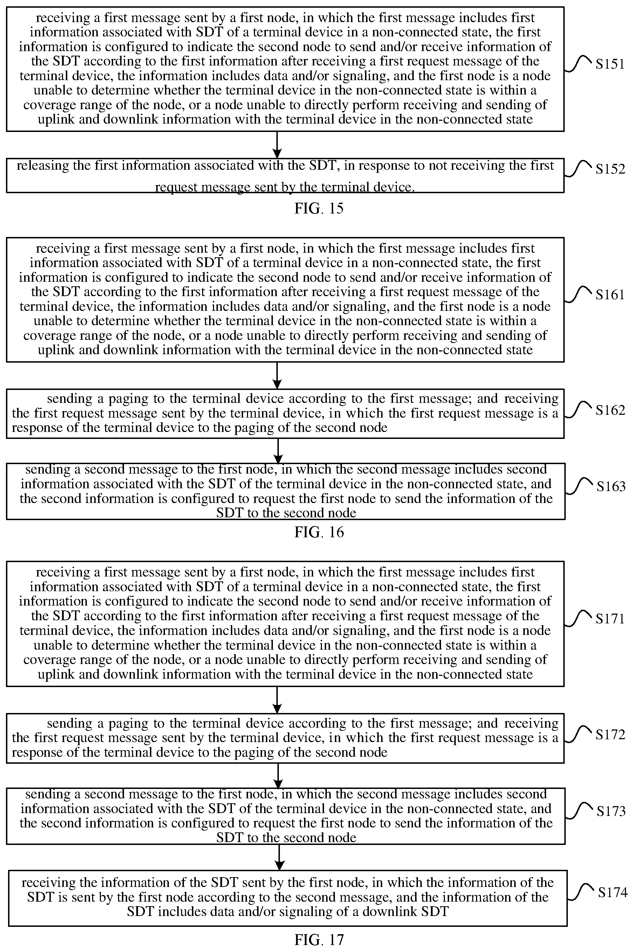

Referring to FIG. 15, FIG. 15 is a flowchart of yet another method for transmitting data provided by an embodiment of the present disclosure.

As illustrated in FIG. 15, the method is performed by the second node, and the method may include, but is not limited to, the following steps:

S151: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

The relevant description of S151 can be found in the above embodiments and is not repeated herein.

In S152: the first information associated with the SDT is released in response to not receiving a first request message sent by the terminal device.

In embodiments of the present disclosure, the second node receives the first message sent by the first node and sends a paging to the terminal device, and if the first request message sent by the terminal device is not received, it can be determined that the terminal device in the non-connected state is not in the coverage range of the second node, or the second node cannot directly perform transceiving of uplink and downlink information with the terminal device in the non-connected state; and in this case, the second node releases the first information associated with the SDT.

The relevant descriptions of the first node and the second node can be found in the above embodiments and are not repeated herein.

It should be noted that in embodiments of the present disclosure, S151 to S152 may be implemented alone or in combination with any of the other steps in the embodiments of the present disclosure, for example, in combination with S111 in embodiments of the present disclosure, which are not limited by the embodiments of the present disclosure.

Referring to FIG. 16, FIG. 16 is a flowchart of yet another method for transmitting data provided by an embodiment of the present disclosure.

As illustrated in FIG. 16, the method is performed by the second node, and the method may include, but is not limited to, the following steps:

S161: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S 162: a paging is sent to the terminal device according to the first message; and a first request message sent by the terminal device is received, in which the first request message is a response of the terminal device to the paging of the second node.

Relevant descriptions of S161 and S162 can be found in the above embodiments and are not repeated herein.

In S 163: a second message is sent to the first node, in which the second message includes second information associated with the SDT of the terminal device in the non-connected state, and the second information is configured to request the first node to send the information of the SDT to the second node.

The relevant description of the second information can be found in the above embodiments and is not repeated herein.

In embodiments of the present disclosure, after receiving the first message sent by the first node, the second node may consider the first message and the first information, and send a paging to the terminal device.

If the terminal device is within the coverage range of the second node, or if the second node can directly perform transceiving of the uplink and downlink information with the terminal device in the non-connected state, a paging may be sent to the terminal device, and after receiving the paging sent by the second node, the terminal device will send a first request message in response to the paging to the second node.

In embodiments of the present disclosure, the first request message may be a Random Access Request and/or an RRC Resume Request, and optionally may also carry information of the uplink SDT, the information of the uplink SDT including data and/or signaling of the uplink SDT.

Based on this, the second node, after receiving the first request message sent by the terminal device in response to the paging, may send a second message to the first node, in which the second message includes second information associated with the SDT of the terminal device in the non-connected state, and the second information is configured to request the first node to send information of the SDT to the second node. The second message can be a RETRIEVE UE CONTEXT REQUEST message.

It may be understood that the second node sends a second message to the first node to inform the first node that the terminal device in the non-connected state is within the coverage range of the second node, and the second node may send the information of the downlink SDT to the terminal device, or, the second node receives the first request message sent by the terminal device, and the first request message carries the information of the uplink SDT; and the second message sent by the second node to the first node includes second information associated with the SDT of the terminal device in the non-connected state to send the information of the uplink SDT to the first node.

The relevant descriptions of the first node and the second node can be found in the above embodiments and are not repeated herein.

It should be noted that, in embodiments of the present disclosure, S161 to S163 may be implemented alone or in combination with any of the other steps in the embodiments of the present disclosure, for example, in combination with S111 in embodiments of the present disclosure, which are not limited by the embodiments of the present disclosure.

Referring to FIG. 17, FIG. 17 is a flowchart of yet another method for transmitting data provided by an embodiment of the present disclosure.

As illustrated in FIG. 17, the method is performed by the second node, and the method may include, but is not limited to, the following steps:

S171: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S172: a paging is sent to the terminal device according to the first message; and a first request message sent by the terminal device is received, in which the first request message is a response of the terminal device to the paging of the second node.

In S173: a second message is sent to the first node, in which the second message includes second information associated with the SDT of the terminal device in the non-connected state, and the second information is configured to request the first node to send the information of the SDT to the second node.

The relevant descriptions of S171 to S173 can be found in the above embodiments and are not repeated herein.

In S174: the information of the SDT sent by the first node is received, in which the information of the SDT is sent by the first node according to the second message, and the information of the SDT includes data and/or signaling of a downlink SDT.

In embodiments of the present disclosure, after receiving the second message sent by the second node, the first node may send information of the SDT to the second node according to the second message, in which the information of the SDT includes data and/or signaling of the downlink SDT.

Based on this, the second node may send the data and/or signaling of the downlink SDT to the terminal device in a case of receiving the data and/or signaling of the downlink SDT sent by the first node. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S171 to S174 in embodiments of the present disclosure may be implemented alone or in combination with any of the other steps in the embodiments of the present disclosure, for example, in combination with S111 and/or S161 to S163 in embodiments of the present disclosure, which are not limited by the embodiments of the present disclosure.

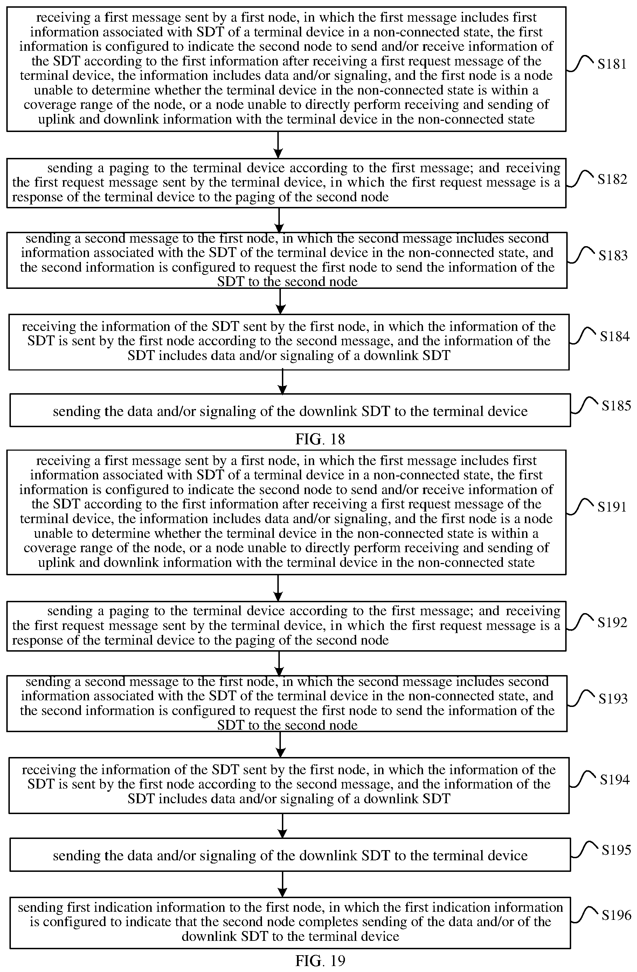

Referring to FIG. 18, FIG. 18 is a flowchart of yet another method for transmitting data provided by an embodiment of the present disclosure.

As illustrated in FIG. 18, the method is performed by the second node, and the method may include, but is not limited to, the following steps:

S181: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S182: a paging is sent to the terminal device according to the first message; and a first request message sent by the terminal device is received, in which the first request message is a response of the terminal device to the paging of the second node.

In S183: a second message is sent to the first node, in which the second message includes second information associated with the SDT of the terminal device in the non-connected state, and the second information is configured to request the first node to send the information of the SDT to the second node.

In S184: the information of the SDT sent by the first node is received, in which the information of the SDT is sent by the first node according to the second message, and the information of the SDT includes data and/or signaling of a downlink SDT.

The relevant descriptions of S181 to S184 can be found in the above embodiments and are not repeated herein.

In S185: data and/or signaling of the downlink SDT is sent to the terminal device.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S181 to S185 in embodiments of the present disclosure may be implemented alone or in combination with any of the other steps in the embodiments of the present disclosure, for example, in combination with S111 and/or S161 to S163 and/or S171 to S174 in embodiments of the present disclosure, which are not limited by the embodiments of the present disclosure.

Referring to FIG. 19, FIG. 19 is a flowchart of yet another method for transmitting data provided by an embodiment of the present disclosure.

As illustrated in FIG. 19, the method is performed by the second node, and the method may include, but is not limited to, the following steps:

S191: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S192: a paging is sent to the terminal device according to the first message; and a first request message sent by the terminal device is received, in which the first request message is a response of the terminal device to the paging of the second node.

In S 193: a second message is sent to the first node, in which the second message includes second information associated with the SDT of the terminal device in the non-connected state, and the second information is configured to request the first node to send the information of the SDT to the second node.

In S194: the information of the SDT sent by the first node is received, in which the information of the SDT is sent by the first node according to the second message, and the information of the SDT includes data and/or signaling of a downlink SDT.

In S 195: data and/or signaling of the downlink SDT is sent to the terminal device.

The relevant descriptions of S191 to S195 can be found in the above embodiments and are not repeated herein.

In S 196: first indication information is sent to the first node, in which the first indication information is configured to indicate that the second node completes sending of the data and/or signaling of the downlink SDT to the terminal device.

In embodiments of the present disclosure, after the second node sends data and/or signaling of the downlink SDT to the terminal device, the first indication information may be sent to the first node, and the first indication information is configured to indicate that the second node completes sending of data and/or signaling of the downlink SDT to the terminal device.

In some embodiments, the first indication information includes at least one of:
identifier information of the terminal device;
an indication of successful sending to the terminal device;
an indication of unsuccessful sending to the terminal device; or
DL TNL information.

In embodiments of the present disclosure, the second node sends the first indication information to the first node, and the first indication information may include the identifier information of the terminal device.

In embodiments of the present disclosure, the second node sends the first indication information to the first node, and the first indication information may include the indication of successful sending to the terminal device.

In embodiments of the present disclosure, the second node sends the first indication information to the first node, and the first indication information may include the indication of unsuccessful sending to the terminal device.

In embodiments of the present disclosure, the second node sends the first indication information to the first node, and the first indication information may include the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S191 to S196 in embodiments of the present disclosure may be implemented alone or in combination with any of the other steps in the embodiments of the present disclosure, for example, in combination with S111 and/or S161 to S163 and/or S171 to S174 and/or S181 to S185 in embodiments of the present disclosure, which are not limited by the embodiments of the present disclosure.

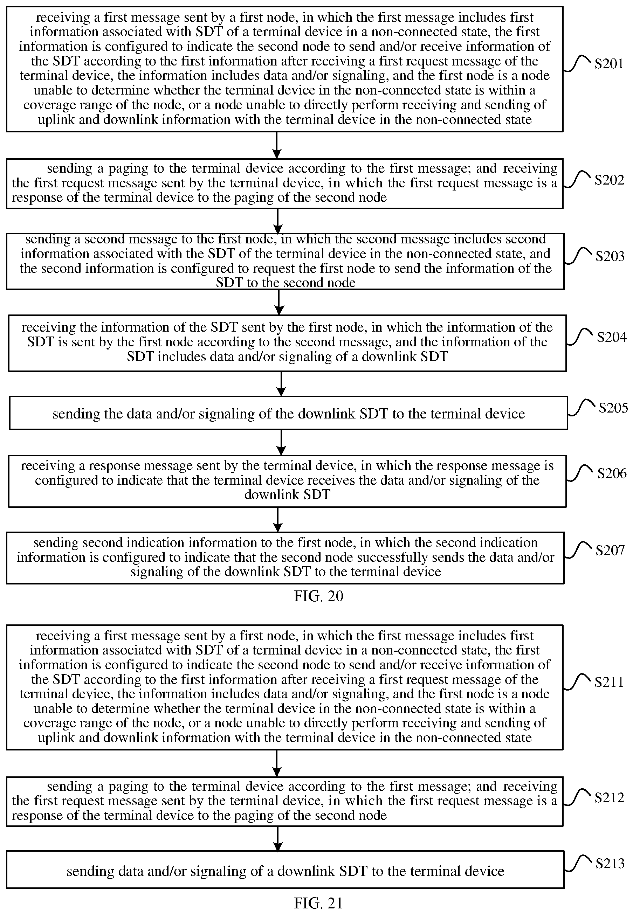

Referring to FIG. 20, FIG. 20 is a flowchart of yet another method for transmitting data provided by an embodiment of the present disclosure.

As illustrated in FIG. 20, the method is performed by the second node, and the method may include, but is not limited to, the following steps:
S201: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

The relevant description of the first information can be found in the above embodiments and is not repeated herein.

In S202: a paging is sent to the terminal device according to the first message; and a first request message sent by the terminal device is received, in which the first request message is a response of the terminal device to the paging of the second node.

In S203: a second message is sent to the first node, in which the second message includes second information associated with the SDT of the terminal device in the non-connected state, and the second information is configured to request the first node to send the information of the SDT to the second node.

In S204: the information of the SDT sent by the first node is received, in which the information of the SDT is sent by the first node according to the second message, and the information of the SDT includes data and/or signaling of a downlink SDT.

In S205: data and/or signaling of the downlink SDT is sent to the terminal device.

The relevant descriptions in S201 to S205 can be found in the above embodiments and are not repeated herein.

In S206: a response message sent by the terminal device is received, in which the response message is configured to indicate that the terminal device receives the data and/or signaling of the downlink SDT.

In S207: second indication information is sent to the first node, in which the second indication information is configured to indicate that the second node successfully sends the data and/or signaling of the downlink SDT to the terminal device.

In embodiments of the present disclosure, after the second node sends data and/or signaling of the downlink SDT to the terminal device, the terminal device may send a response message to the second node if it successfully receives the data and/or signaling of the downlink SDT sent by the second node, and the second node may receive the response message sent by the terminal device and determine that the terminal device successfully receives the data and/or signaling of the downlink SDT.

In this case, the second node sends second indication information to the first node, and the second indication information is configured to indicate that the second node successfully sends data and/or signaling of the downlink SDT to the terminal device.

In some embodiments, the second indication information includes at least one of:
identifier information of the terminal device;
an indication of successful sending to the terminal device;
an indication of unsuccessful sending to the terminal device; or
DL TNL information.

In embodiments of the present disclosure, the second node sends the second indication information to the first node, and the second indication information includes the identifier information of the terminal device.

In embodiments of the present disclosure, the second node sends the second indication information to the first node, and the second indication information includes the indication of successful sending to the terminal device.

In embodiments of the present disclosure, the second node sends the second indication information to the first node, and the second indication information includes the indication of unsuccessful sending to the terminal device.

In embodiments of the present disclosure, the second node sends the second indication information to the first node, and the second indication information includes the DL TNL information.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S201 to S206 may be implemented alone or in combination with any of the other steps in the embodiments of the present disclosure, for example, in combination with S111 and/or S161 to S163 and/or S171 to S174 and/or S181 to S185 in embodiments of the present disclosure, which are not limited by the embodiments of the present disclosure.

Referring to FIG. 21, FIG. 21 is a flowchart of yet another method for transmitting data provided by an embodiment of the present disclosure.

As illustrated in FIG. 21, the method is performed by the second node, and the method may include, but is not limited to, the following steps:
S211: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

The relevant descriptions of the first information and the first message can be found in the relevant descriptions in the above embodiments and are not repeated herein.

In S212: a paging is sent to the terminal device according to the first message; and a first request message sent by the terminal device is received, in which the first request message is a response of the terminal device to the paging of the second node.

In S213: data and/or signaling of the downlink SDT is sent to the terminal device.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that S211 to S213 in embodiments of the present disclosure may be implemented alone or in combination with any of the other steps in the embodiments of the present disclosure, for example, in combination with S111 and/or S131 to S132 in embodiments of the present disclosure, which are not limited by the embodiments of the present disclosure.

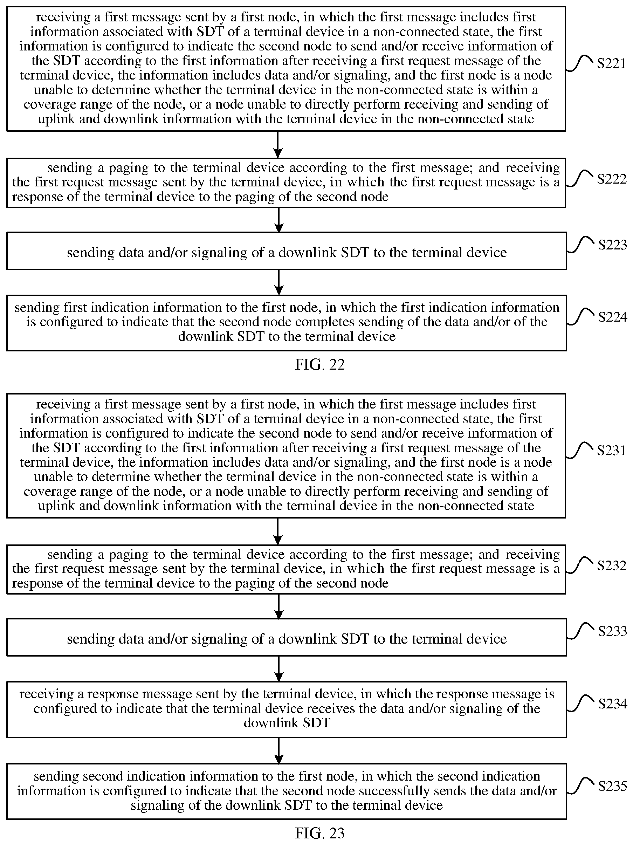

Referring to FIG. 22, FIG. 22 is a flowchart of yet another method for transmitting data provided by an embodiment of the present disclosure.

As illustrated in FIG. 22, the method is performed by the second node, and the method may include, but is not limited to, the following steps:
S221: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message of an Xn user plane.

In some embodiments, the third message may further include an identifier associated with the terminal device, such as a terminal device paging identity (UE RAN Paging Identity), configured to indicate the terminal device corresponding to the third information included in the third message.

The relevant descriptions of the first information and the first message can be found in the relevant descriptions in the above embodiments and are not repeated herein.

In S222: a paging is sent to the terminal device according to the first message; and a first request message sent by the terminal device is received, in which the first request message is a response of the terminal device to the paging of the second node.

In S223: data and/or signaling of the downlink SDT is sent to the terminal device.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

The relevant descriptions of S221 to S223 can be found in the above embodiments and are not repeated herein.

In S224: first indication information is sent to the first node, in which the first indication information is configured to indicate that the second node completes sending of the data and/or signaling of the downlink SDT to the terminal device.

The relevant description of S224 can be found in the above embodiments and is not repeated herein.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S221 to S224 may be implemented alone or in combination with any of the other steps in the embodiments of the present disclosure, for example in combination with S111 and/or S131 to S132 and/or S211 to S213 in embodiments of the present disclosure, which are not limited by the embodiments of the present disclosure.

Referring to FIG. 23, FIG. 23 is a flowchart of yet another method for transmitting data provided by an embodiment of the present disclosure.

As illustrated in FIG. 23, the method is performed by the second node, and the method may include, but is not limited to, the following steps:
S231: a first message sent by the first node is received, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the first node sends third information to the second node, and the third information includes at least one of:
data of a downlink SDT;
signaling of a downlink SDT; or
data and signaling of a downlink SDT.

The third information is included in the first message and/or the third message. It may be understood that the third information is included in the first message, and the third information is sent to the second node at the same time as the first message. The third information is included in the third message, and the third message may be sent at the same time as the first message, or before or after the first message.

The third message may be an RRC transmission message on the XnAP or a message from the Xn user plane.

In some embodiments, the third message may further include an identifier associated with the terminal device, such as a terminal device paging identity (UE RAN Paging Identity), configured to indicate the terminal device corresponding to the third information included in the third message.

The relevant descriptions of the first information and the first message can be found in the relevant descriptions in the above embodiments and are not repeated herein.

In S232: a paging is sent to the terminal device according to the first message; and a first request message sent by the terminal device is received, in which the first request message is a response of the terminal device to the paging of the second node.

In S233: data and/or signaling of the downlink SDT is sent to the terminal device.

It may be understood that in a case where the first node sends the first message to the second node, and the first message includes the first information and also includes the data and/or signaling of the downlink SDT, the second node sends a paging to the terminal device according to the first information; and in a case where the second node receives a first request message of the terminal device in response to the paging, since the second node has already received the information of the downlink SDT sent by the first node, the second node may send the information of the downlink SDT directly to the terminal device. Hence, the first node can accurately perform the transceiving of the information of the SDT with the terminal device in the non-connected state, and can avoid transmission failure and resource waste.

In S234: a response message sent by the terminal device is received, in which the response message is configured to indicate that the terminal device receives the data and/or signaling of the downlink SDT.

The relevant descriptions in S231 to S234 can be found in the above embodiments and are not repeated herein.

In S235: second indication information is sent to the first node, in which the second indication information is configured to indicate that the second node successfully sends the data and/or signaling of the downlink SDT to the terminal device.

The relevant description of S235 can be found in the above embodiments and is not repeated herein.

In embodiments of the present disclosure, after receiving the data and/or signaling of the downlink SDT sent by the first node, the second node may send the data and/or signaling of the downlink SDT to the terminal device. Hence, the first node can accurately perform the transceiving of the information of the SDT with the terminal device in the non-connected state, and can avoid transmission failure and resource waste.

The relevant descriptions of the first node and the second node can be found in the above embodiments and are not repeated herein.

It should be noted that in embodiments of the present disclosure, S231 to S235 may be implemented alone or in combination with any of the other steps in the embodiments of the present disclosure, for example in combination with S111 and/or S131 to S132 and/or S211 to S213 in embodiments of the present disclosure, which are not limited by the embodiments of the present disclosure.

In embodiments provided in the present disclosure described above, the methods provided in embodiments of the present disclosure are described from the perspective of a first node, and a second node, respectively. In order to realize each of the functions in the method provided in the embodiments of the present disclosure described above, the first node and the second node may include a hardware structure, a software module, in the form of a hardware structure, a software module, or a hardware structure plus a software module to realize each of the functions described above. One of the above functions can be performed as a hardware structure, a software module, or a hardware structure plus a software module.

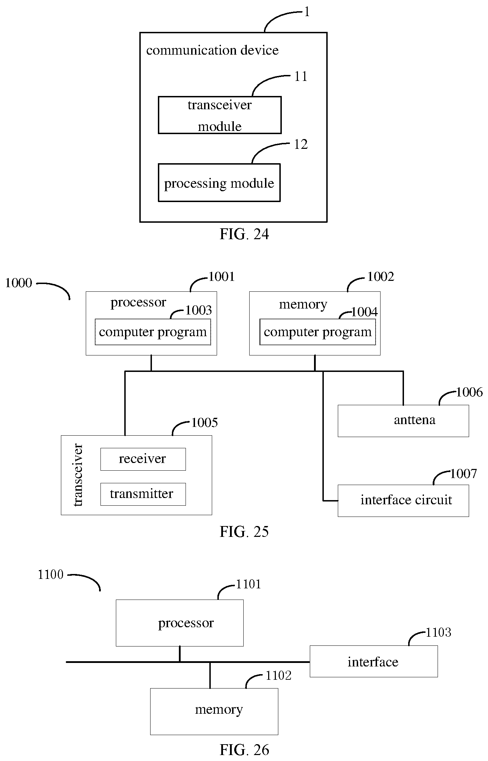

Referring to FIG. 24, a block diagram of a communication device 1 provided by an embodiment of the present disclosure is illustrated. The communication device 1 illustrated in FIG. 24 may include a transceiver module 11 and a processing module 12. The transceiver module may include a sending module and/or a receiving module, the sending module is configured to realize a sending function, the receiving module is configured to realize a receiving function, and the transceiver module may realize a sending function and/or a receiving function.

The communication device 1 is the first node:

The communication device 1 includes: a transceiver module 11 and a processing module 12.

The processing module is configured to determine information of a small data transmission (SDT) needing to be sent and/or received, in which the information includes data and/or signaling, the first node is a node that is incapable of determining whether a terminal device in a non-connected state is within its coverage range or a node incapable of directly performing transceiving of uplink and downlink information with the terminal device in the non-connected state; and
the transceiver module is configured to send a first message to a second node, in which the first message includes first information associated with the SDT of the terminal device in the non-connected state, and the first information is configured to indicate the second node to send and/or receive the information of the SDT according to the first information after receiving a first request message of the terminal device.

In some embodiments, the first information includes at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

In some embodiments, the transceiver module 11 is further configured to receive a second message sent by the second node, in which the second message is sent by the second node after receiving the first request message sent by the terminal device, the second message includes second information associated with the SDT of the terminal device in the non-connected state, the second information is configured to request the first node to send the information of the SDT to the second node, and the first request message is a response of the terminal device to the paging of the second node.

In some embodiments, the second information includes at least one of:
an MT-SDT indication; or
downlink transmission network layer (TNL) information.

In some embodiments, the transceiver module 11 is further configured to send the information of the SDT to the second node according to the second message, in which the information of the SDT include data and/or signaling of the downlink SDT.

In some embodiments, the first node sends third information to the second node, and the third information includes at least one of:
data of a downlink SDT;
signaling of a downlink SDT; or
data and signaling of a downlink SDT.

In some embodiments, the third information is included in the first message and/or the third message.

In some embodiments, the third message may further include an identifier associated with the terminal device.

In some embodiments, the transceiver module 11 is further configured to receive first indication information sent by the second node, in which the first indication information is configured to indicate that the second node completes sending of the data and/or signaling of the downlink SDT to the terminal device.

In some embodiments, the transceiver module 11 is further configured to receive second indication information sent by the second node, in which the second indication information is sent by the second node in a case of receiving a response message sent by the terminal device, and the second indication information is configured to indicate that the second node successfully sends the data and/or signaling of the downlink SDT to the terminal device.

In some embodiments, the first indication information and/or the second indication information includes at least one of:
identifier information of the terminal device;
an indication of successful sending to the terminal device;
an indication of unsuccessful sending to the terminal device; or
DL TNL information.

In some embodiments, the first node is a first access network device, the second node is a second access network device, the first access network device is an access network device last serving the terminal device, and the second access network device is an access network device currently serving the terminal device.

In some embodiments, the first message is at least one of:
a radio access network (RAN) paging message;
a partial terminal device context transmission message; or
an Xn application proposal (XnAP) message.

In some embodiments, the second message is at least one of:
a retrieve terminal device context request message;
a partial terminal device context acknowledge message; or
an Xn application proposal (XnAP) message.

In some embodiments, the first node is a core network node and the second node is an access network device.

In some embodiments, the core network node is at least one of:
an access and mobility management function (AFM);
a session management function (SMF); or
a user plane function (UPF).

In some embodiments, the first message is at least one of:
a next generation application proposal (NGAP) message; or
a message included in user plane data.

In some embodiments, the first node is a central unit user plane (CU-UP), and the second node is a central unit control plane (CU-CP).

In some embodiments, the first message is at least one of:
a downlink data communication message;
a bearer context modification required message; or
an E1 application proposal (E1AP) message.

In some embodiments, the first node is a central unit (CU) or a CU-CP, and the second node is a distributed unit (DU).

In some embodiments, the first message is at least one of:
a paging message;
a terminal device context modification request message;
a terminal device context setup request message; or
an F1 application proposal (F1AP) message.

In some embodiments, the second message is at least one of:
an SDT sending notification message;
an initial uplink RRC message transmission message; or
an F1 application proposal (F1AP) message.

The communication device 1 is the second node:

The communication device 1 includes: a transceiver module 11 and a processing module 12.

The transceiver module 11 is configured to receive a first message sent by a first node, in which the first message includes first information associated with SDT of a terminal device in a non-connected state, the first information is configured to indicate the second node to send and/or receive information of the SDT according to the first information after receiving a first request message of the terminal device, the information includes data and/or signaling, and the first node is a node that is incapable of determining whether the terminal device in the non-connected state is within its coverage range, or a node incapable of directly performing transceiving of uplink and downlink information with the terminal device in the non-connected state.

In some embodiments, the transceiver module 11 is further configured to receive a first request message sent by the terminal device, in which the first request message is configured to indicate data and/or signaling of an uplink SDT.

In some embodiments, the transceiver module 11 is further configured to send a paging to the terminal device according to the first message; and receive the first request message sent by the terminal device, in which the first request message is a response of the terminal device to the paging of the second node.

In some embodiments, the processing module 12 is configured to configure a resource of the SDT for the terminal device according to the first information.

In some embodiments, the first information includes at least one of:
partial terminal device context information;
uplink transmission network layer (TNL) information;
an MT-SDT manner;
an MT-SDT type;
an uplink transmission characteristic of the terminal device; or
a downlink transmission characteristic of the terminal device.

In some embodiments, the transceiver module 11 is further configured to send a second message to the first node, in which the second message includes second information associated with the SDT of the terminal device in the non-connected state, and the second information is configured to request the first node to send the information of the SDT to the second node.

In some embodiments, the second information includes at least one of:
an MT-SDT indication; or
downlink transmission network layer (TNL) information.

In some embodiments, the transceiver module 11 is further configured to receive the information of the SDT sent by the first node, in which the information of the SDT is sent by the first node according to the second message, and the information of the SDT include data and/or signaling of a downlink SDT.

In some embodiments, the first node sends third information to the second node, and the third information includes at least one of:
data of a downlink SDT;
signaling of a downlink SDT; or
data and signaling of a downlink SDT.

In some embodiments, the third information is included in the first message and/or a third message.

In some embodiments, the third message further includes an identifier associated with the terminal device.

In some embodiments, the transceiver module 11 is further configured to send the data and/or signaling of the downlink SDT to the terminal device.

In some embodiments, the transceiver module 11 is further configured to send first indication information to the first node, in which the first indication information is configured to indicate that the second node completes sending of the data and/or signaling of the downlink SDT to the terminal device.

In some embodiments, the transceiver module 11 is further configured to receive a response message sent by the terminal device, in which the response message is configured to indicate that the terminal device receives the data and/or signaling of the downlink SDT.

In some embodiments, the transceiver module 11 is further configured to send second indication information to the first node, in which the second indication information is configured to indicate that the second node successfully sends the data and/or signaling of the downlink SDT to the terminal device.

In some embodiments, the first indication information and/or the second indication information includes at least one of:
identifier information of the terminal device;
an indication of successful sending to the terminal device;
an indication of unsuccessful sending to the terminal device; or
DL TNL information.

In some embodiments, the processing module 12 is further configured to release the first information associated with the SDT in response to not receiving the first request message sent by the terminal device.

In some embodiments, the first node is a first access network device, the second node is a second access network device, the first access network device is an access network device last serving the terminal device, and the second access network device is an access network device currently serving the terminal device.

In some embodiments, the first message is at least one of:
a radio access network (RAN) paging message;
a partial terminal device context transmission message; or
an Xn application proposal (XnAP) message.

In some embodiments, the second message is at least one of:
a retrieve terminal device context request message;
a partial terminal device context acknowledge message; or
an Xn application proposal (XnAP) message.

In some embodiments, the first node is a core network node and the second node is an access network device.

In some embodiments, the core network node is at least one of:
an access and mobility management function (AFM);
a session management function (SMF); or
a user plane function (UPF).

In some embodiments, the first message is at least one of:
a next generation application proposal (NGAP) message; or
a message included in user plane data.

In some embodiments, the first node is a central unit user plane (CU-UP), and the second node is a central unit control plane (CU-CP).

In some embodiments, the first message is at least one of:
a downlink data communication message;
a bearer context modification required message; or
an E1 application proposal (E1AP) message.

In some embodiments, the first node is a central unit (CU) or a CU-CP, and the second node is a distributed unit (DU).

In some embodiments, the first message is at least one of:
a paging message;
a terminal device context modification request message;
a terminal device context setup request message; or
an F1 application proposal (F1AP) message.

In some embodiments, the second message is at least one of:
an SDT sending notification message;
an initial uplink RRC message transmission message; or
an F1 application proposal (F1AP) message.

With regard to the communication device 1 in the above embodiment, the specific manner in which each module performs an operation is described in detail in the embodiments relating to the method, and will not be described in detail herein.

The communication device 1 provided in the above embodiments of the present disclosure achieves the same or similar beneficial effects as the method for transmitting data provided in some of the above embodiments, and is not repeated herein.

Referring to FIG. 25, FIG. 25 is a block diagram of another communication device 1000 provided by an embodiment of the present disclosure. The communication device 1000 may be the first node, or the second node, or a chip, chip system, or processor, etc. that supports the first node to implement the above method, or a chip, chip system, or processor, etc. that supports the second node to implement the above method. The communication device 1000 may be used to implement the methods described in the method embodiments described above, details of which may be found in the description of the method embodiments described above.

The communication device 1000 may include one or more processors 1001. The processor 1001 may be a general purpose processor or a specialized processor, etc. This may be, for example, a baseband processor or a central processor. The baseband processor may be used to process the communication protocol as well as the communication data, and the central processor may be used to control the communication device (e.g., the first node, the second node, the baseband chip, the terminal device, the terminal device chip, the DU or the CU, etc.), execute the computer program, and process the data of the computer program.

Optionally, the communication device 1000 may also include one or more memories 1002, on which a computer program 1004 may be stored, and the memory 1002 executes the computer program 1004 to cause the communication device 1000 to perform the method described in the method embodiments described above. Optionally, data may also be stored in the memory 1002. The communication device 1000 and the memory 1002 may be provided separately or may be integrated together.

Optionally, the communication device 1000 may also include a transceiver 1005, and an antenna 1006. The transceiver 1005 may be referred to as a transceiver unit, a transceiver machine, or a transceiver circuit, etc., and is used to implement the sending and receiving functions. The transceiver 1005 may include a receiver and a transmitter, the receiver may be referred to as a receiving machine or a receiving circuit, etc., for implementing the receiving function, and the transmitter may be referred to as a transmitting machine or a transmitting circuit, etc., for implementing the sending function.

Optionally, the communication device 1000 may also include one or more interface circuits 1007. The interface circuit 1007 is used to receive code instructions and transmit them to the processor 1001. The processor 1001 runs said code instructions to cause the communication device 1000 to perform the method described in the method embodiments above.

The communication device 1000 is a first node: the processor 1001 is used to perform S51 in FIG. 5; S61 in FIG. 6; S71 in FIG. 7; S81 in FIG. 8; S91 in FIG. 9; S101 in FIG. 10; and the transceiver 1005 is used to perform S52 in FIG. 5; S62 to S64 in FIG. 6; S72 to S75 in FIG. 7; and S82 to S85 in FIG. 8; S92 to S93 in FIG. 9; and S102 to S103 in FIG. 10.

The communication device 1000 is a second node: the transceiver 1005 is used to perform S111 in FIG. 11; S121 to S123 in FIG. 12; S131 to S132 in FIG. 13; S141 to S142 in FIG. 14; S151 in FIG. 15; S161 to S163 in FIG. 16; S171 to S174 in FIG. 17; S181 to S185 in FIG. 18; S191 to S196 in FIG. 19; S201 to S207 in FIG. 20; S211 to S214 in FIG. 21; and S221 to S225 in FIG. 22; and the processor 1001 is used to perform S143 in FIG. 14; and S152 in FIG. 15.

In one implementation, the processor 1001 may include a transceiver for implementing transceiving functions. The transceiver may, for example, be a transceiver circuit, or an interface, or an interface circuit. The transceiver circuit, interface or interface circuit used to implement the transceiving functions may be separate or integrated together. The above transceiver circuit, interface or interface circuit may be used for code/data reading and writing or the above transceiver circuit, interface or interface circuit may be used for signal transmission or delivery.

In one implementation, the processor 1001 may store a computer program 1003, and the computer program 1003 running on the processor 1001 may cause the communication device 1000 to perform the method described in the method embodiments above. The computer program 1003 may be solidified in the processor 1001, and in this case, the processor 1001 may be implemented by hardware.

In one implementation, the communication device 1000 may include a circuit, and the circuit may realize the function of sending or receiving or communicating in the method embodiments above. The processor and transceiver described in the present disclosure may be implemented on integrated circuit (IC), analog IC, radio frequency integrated circuit (RFIC), mixed signal IC, application specific integrated circuit (ASIC), printed circuit board (PCB), electronic device, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a first node or a second node, but the scope of the communication device described in the present disclosure is not limited thereto, and the structure of the communication device may not be limited by FIG. 25. The communication device may be a stand-alone device or may be part of a larger device. For example the communication device may be:
(1) a stand-alone integrated circuit IC, or chip, or, chip system or subsystem;
(2) a collection of ICs having one or more ICs, optionally, the collection of ICs may also include storage components for storing data, computer programs;
(3) ASIC, e.g., modem;
(4) a module that can be embedded in other device;
(5) receiver machine, terminal device, intelligent terminal device, cellular phone, wireless device, handheld, mobile unit, in-vehicle device, network device, cloud device, artificial intelligence device, and so on;
(6) Others, etc.

For the case where the communication device may be a chip or a chip system, see FIG. 26 for a block diagram of a chip provided in an embodiment of the present disclosure.

The chip 1100 includes a processor 1101 and an interface 1103. The number of processors 1101 may be one or more, and the number of interfaces 1103 may be more than one.

For the case where the chip is used to realize the function of the first node in embodiments of the present disclosure:

The interface 1103 is configured to receive code instructions and transmit them to the processor.

The processor 1101 is configured to run code instructions to perform the method for transmitting as described in some of the embodiments above.

For the case where the chip is used to realize the function of the second node in embodiments of the present disclosure:

The interface 1103 is configured to receive code instructions and transmit them to the processor.

The processor 1101 is configured to run code instructions to perform the method for transmitting as described in some of the embodiments above.

Optionally, the chip 1100 further includes a memory 1102, and the memory 1102 being used to store necessary computer program and data.

A person skilled in the art may also appreciate that the various illustrative logical blocks and steps set forth in the embodiments of the present disclosure may be implemented by electronic hardware, computer software, or a combination of both. Whether such a function is realized in hardware or software depends on the specific application and the design requirements of the overall system. For each particular application, a person skilled in the art may use various methods to implement the described function, but such implementations should not be construed as being outside the scope of protection of the embodiments of the present disclosure.

Embodiments of the present disclosure also provide a system for transmitting data, the system includes a communication device as a first node and a communication device as a second node in the aforementioned embodiment of FIG. 24, or, the system includes a communication device as a first node and a communication device as a second node in the aforementioned embodiment of FIG. 25.

The present disclosure also provides a readable storage medium having stored thereon instructions which, when executed by a computer, realize the functions of any of the method embodiments described above.

The present disclosure also provides a computer program product that, when executed by a computer, implements the function of any of the method embodiments described above.

In the above embodiments, this may be accomplished in whole or in part by software, hardware, firmware, or any combination thereof. When implemented using software, it may be implemented in whole or in part as a computer program product. The computer program product includes one or more computer programs. When loaded and executed on a computer, the computer program described herein produces, in whole or in part, a process or function in accordance with the processes described in embodiments of the present disclosure. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second, and other various numerical numbers involved in the present disclosure are only described for the convenience of differentiation, and are not used to limit the scope of the embodiments of the present disclosure, and also indicate the order of precedence.

The at least one of the present disclosure may also be described as one or more, and the plurality may be two, three, four, or more, without limitation of the present disclosure. In embodiments of the present disclosure, for a type of technical feature, a technical feature of this type is distinguished by "first", "second", "third", "A", "B", "C", and "D", etc., and the technical features described by "first", "second", "third", "A", "B", "C" and "D" are not in any order of priority or magnitude.

The correspondences illustrated in the tables in the present disclosure may be configured or may be predefined. The values of the information in the tables are merely examples and may be configured to other values, which are not limited by this disclosure. When configuring the correspondence between the information and each parameter, it is not necessary to configure all the correspondences illustrated in each table. For example, certain rows of the table in the present disclosure illustrate correspondences that may also not be configured. As another example, appropriate distortion adjustments can be made based on the above table, e.g., splitting, merging, and so on. The names of the parameters illustrated in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present disclosure may be understood as defined, pre-defined, stored, pre-stored, pre-negotiated, pre-configured, solidified, or pre-fired.

A person of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A skilled person may use different methods for each particular application to implement the described functionality, but such implementations should not be considered outside the scope of the present disclosure.

It can be clearly understood by a person skilled in the art, for the convenience and brevity of the description, the specific working processes of the above-described systems, apparatuses, and units can be referred to the corresponding processes in the foregoing embodiments of the method, and will not be repeated herein.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. A method for transmitting data, performed by a first node, comprising:
determining information of small data transmission (SDT) needing to be sent and/or received, wherein the first node is a node that is incapable of determining whether a terminal device in a non-connected state is within its coverage range, or a node incapable of directly performing transceiving of uplink and downlink information with a terminal device in a non-connected state; and
sending a first message to a second node, wherein the first message comprises first information associated with the SDT of the terminal device in the non-connected state, and the first information is configured to indicate the second node to send and/or receive the information of the SDT according to the first information after receiving a first request message of the terminal device.

2. The method according to claim 1, wherein the first information comprises at least one of:
partial terminal device context information;
uplink transmission network layer (TNL) information;
a mobile terminated (MT)-SDT manner;
an MT-SDT type;
an uplink transmission characteristic of the terminal device; or
a downlink transmission characteristic of the terminal device.

3. The method according to claim 2, further comprising:
receiving a second message sent by the second node, wherein the second message is sent by the second node after receiving the first request message sent by the terminal device, the second message comprises second information associated with the SDT of the terminal device in the non-connected state, the second information is configured to request the first node to send the information of the SDT to the second node, and the first request message is a response of the terminal device to paging of the second node.

4. The method according to claim 3, wherein the second information comprises at least one of:
an MT-SDT indication; or
downlink transmission network layer (TNL) information.

5. The method according to claim 3 or 4, further comprising:
sending the information of the SDT to the second node according to the second message, wherein the information of the SDT comprises data and/or signaling of a downlink SDT.

6. The method according to claim 1 or 2, further comprising:
sending third information to the second node, wherein the third information comprises at least one of:
data of a downlink SDT;
signaling of a downlink SDT; or
data and signaling of a downlink SDT.

7. The method according to claim 6, wherein the third information is comprised in the first message and/or a third message.

8. The method according to claim 7, wherein the third message further comprises an identifier associated with the terminal device.

9. The method according to claim 5 or 6, further comprising:
Receiving first indication information sent by the second node, wherein the first indication information is configured to indicate that the second node completes sending of the data and/or signaling of the downlink SDT to the terminal device.

10. The method according to claim 5 or 6, further comprising:
receiving second indication information sent by the second node, wherein the second indication message is sent by the second node in a case of receiving a response message sent by the terminal device, and the second indication information is configured to indicate the second node successfully sends the data and/or signaling of the downlink SDT to the terminal device.

11. The method according to claim 9 or 10, wherein the first indication information and/or the second indication information comprises at least one of:
identifier information of the terminal device;
an indication of successful sending to the terminal device;
an indication of unsuccessful sending to the terminal device; or
downlink TNL information.

12. The method according to any one of claims 1 to 11, wherein the first node is a first access network device, the second node is a second access network device, the first access network device is an access network device last serving the terminal device, and the second access network device is an access network device currently serving the terminal device.

13. The method according to claim 12, wherein the first message is at least one of:
a radio access network (RAN) paging message;
a partial terminal device context transmission message; or
an Xn application proposal (XnAP) message.

14. The method according to claim 12, wherein the second message is at least one of:
a retrieve terminal device context request message;
a partial terminal device context acknowledge message; or
an Xn application proposal (XnAP) message.

15. The method according to any one of claims 1 to 11, wherein the first node is a core network node and the second node is an access network device.

16. The method according to claim 15, wherein the core network node is at least one of:
an access and mobility management function (AFM);
a session management function (SMF); or
a user plane function (UPF).

17. The method according to claim 15 or 16, wherein the first message is at least one of:
a next generation application proposal (NGAP) message; or
a message comprised in user plane data.

18. The method according to any one of claims 1 to 11, wherein the first node is a central unit user plane (CU-UP), and the second node is a central unit control plane (CU-CP).

19. The method according to claim 18, wherein the first message is at least one of:
a downlink data communication message;
a bearer context modification required message; or
an E1 application proposal (E1AP) message.

20. The method according to any one of claims 1 to 11, wherein the first node is a central unit (CU) or a CU-CP, and the second node is a distributed unit (DU).

21. The method according to claim 20, wherein the first message is at least one of:
a paging message;
a terminal device context modification request message;
a terminal device context setup request message; or
an F1 application proposal (F1AP) message.

22. The method according to claim 20, wherein the second message is at least one of:
an SDT sending notification message;
an initial uplink RRC message transmission message; or
an F1 application proposal (F1AP) message.

23. A method for transmitting data, performed by a second node, comprising:
receiving a first message sent by a first node, wherein the first message comprises first information associated with SDT of a terminal device in a non-connected state, the first information is configured to indicate the second node to send and/or receive information of the SDT according to the first information after receiving a first request message of the terminal device, and the first node is a node that is incapable of determining whether the terminal device in the non-connected state is within its coverage range, or a node incapable of directly performing transceiving of uplink and downlink information with the terminal device in the non-connected state.

24. The method according to claim 23, further comprising:
receiving a first request message sent by the terminal device, wherein the first request message is configured to indicate data and/or signaling of an uplink SDT.

25. The method according to claim 23, further comprising:
sending a paging to the terminal device according to the first message; and
receiving the first request message sent by the terminal device, wherein the first request message is a response of the terminal device to the paging of the second node.

26. The method according to claim 25, further comprising:
configuring a resource of the SDT for the terminal device according to the first information.

27. The method according to claim 25 or 26, wherein the first information comprises at least one of:
partial terminal device context information;
uplink transmission network layer (TNL) information;
an MT-SDT manner;
an MT-SDT type;
an uplink transmission characteristic of the terminal device; or
a downlink transmission characteristic of the terminal device.

28. The method according to claim 27, further comprising:
sending a second message to the first node, wherein the second message comprises second information associated with the SDT of the terminal device in the non-connected state, and the second information is configured to request the first node to send the information of the SDT to the second node.

29. The method according to claim 28, wherein the second information comprises at least one of:
an MT-SDT indication; or
downlink transmission network layer (TNL) information.

30. The method according to claim 28 or 29, further comprising:
receiving the information of the SDT sent by the first node, wherein the information of the SDT is sent by the first node according to the second message, and the information of the SDT comprises data and/or signaling of a downlink SDT.

31. The method according to claim 27, further comprising:
receiving third information sent by the first node, wherein the third information comprises at least one of:
data of a downlink SDT;
signaling of a downlink SDT;
data and signaling of a downlink SDT.

32. The method according to claim 31, wherein the third information is comprised in the first message and/or a third message.

33. The method according to claim 32, wherein the third message further comprises an identifier associated with the terminal device.

34. The method according to claim 30 or 31, further comprising:
sending data and/or signaling of the downlink SDT to the terminal device.

35. The method according to claim 34, further comprising:
sending first indication information to the first node, wherein the first indication information is configured to indicate that the second node completes sending of the data and/or of the downlink SDT to the terminal device.

36. The method according to claim 34, further comprising:
receiving a response message sent by the terminal device, wherein the response message is configured to indicate that the terminal device receives the data and/or signaling of the downlink SDT.

37. The method according to claim 36, further comprising:
sending second indication information to the first node, wherein the second indication information is configured to indicate that the second node successfully sends the data and/or signaling of the downlink SDT to the terminal device.

38. The method according to claim 36 or 37, wherein the first indication information and/or the second indication information comprises at least one of:
identifier information of the terminal device;
an indication of successful sending to the terminal device;
an indication of unsuccessful sending to the terminal device; or
downlink TNL information.

39. The method according to claim 25, further comprising:
releasing the first information associated with the SDT, in response to not receiving the first request message sent by the terminal device.

40. The method according to any one of claims 23 to 39, wherein the first node is a first access network device, the second node is a second access network device, the first access network device is an access network device last serving the terminal device, and the second access network device is an access network device currently serving the terminal device.

41. The method according to claim 40, wherein the first message is at least one of:
a radio access network (RAN) paging message;
a partial terminal device context transmission message; or
an Xn application proposal (XnAP) message.

42. The method according to claim 40, wherein the second message is at least one of:
a retrieve terminal device context request message;
a partial terminal device context acknowledge message; or
an Xn application proposal (XnAP) message.

43. The method according to any one of claims 23 to 39, wherein the first node is a core network node and the second node is an access network device.

44. The method according to claim 43, wherein the core network node is at least one of:
an access and mobility management function (AFM);
a session management function (SMF); or
a user plane function (UPF).

45. The method according to claim 43 or 44, wherein the first message is at least one of:
a next generation application proposal (NGAP) message; or
a message comprised in user plane data.

46. The method according to any one of claims 23 to 39, wherein the first node is a central unit user plane (CU-UP), and the second node is a central unit control plane (CU-CP).

47. The method according to claim 46, wherein the first message is at least one of:
a downlink data communication message;
a bearer context modification required message; or
an E1 application proposal (E1AP) message.

48. The method according to any one of claims 23 to 39, wherein the first node is a central unit (CU) or a CU-CP, and the second node is a distributed unit (DU).

49. The method according to claim 48, wherein the first message is at least one of:
a paging message;
a terminal device context modification request message;
a terminal device context setup request message; or
an F1 application proposal (F1AP) message.

50. The method according to claim 48, wherein the second message is at least one of:
an SDT sending notification message;
an initial uplink RRC message transmission message; or
an F1 application proposal (F1AP) message.

51. A communication device, comprising:
a processing module configured to determine information of small data transmission (SDT) needing to be sent and/or received, wherein the first node is a node that is incapable of determining whether a terminal device in a non-connected state is within its coverage range, or a node incapable of directly performing transceiving of uplink and downlink information with a terminal device in a non-connected state; and
a transceiver module configured to send a first message to a second node, wherein the first message comprises first information associated with the SDT of the terminal device in the non-connected state, and the first information is configured to indicate the second node to send and/or receive the information of the SDT according to the first information after receiving a first request message of the terminal device.

52. A communication device, comprising:
a transceiver module configured to receive a first message sent by a first node, wherein the first message comprises first information associated with SDT of a terminal device in a non-connected state, the first information is configured to indicate the second node to send and/or receive information of the SDT according to the first information after receiving a first request message of the terminal device, and the first node is a node that is incapable of determining whether the terminal device in the non-connected state is within its coverage range, or a node incapable of directly performing transceiving of uplink and downlink information with the terminal device in the non-connected state.

53. A communication device, comprising: a processor, and a memory storing a computer program, wherein the processor executes the computer program stored in the memory to cause the device to perform the method according to any one of claims 1 to 22, or the processor executes the computer program stored in the memory to cause the device to perform the method according to any one of claims 23 to 50.

54. A computer-readable storage medium configured to store instructions that, when executed, cause the method according to any one of claims 1 to 22 to be implemented, or when executed, cause the method according to any one of claims 23 to 50 to be implemented.
